# EUROPÄISCHE PATENTSCHRIFT

(11) **EP 3 816 590 B1**
(45) Veröffentlichungstag und Bekanntmachung des Hinweises auf die Patenterteilung: **17.08.2022**
(21) Anmeldenummer: 19206208.1
(22) Anmeldetag: 30.10.2019
(51) Int. Cl.: G01F 15/14, G01F 1/66, G01F 1/667

(54) **ULTRASCHALL-MESSVORRICHTUNG ZUR ULTRASCHALLMESSUNG AN EINEM STRÖMENDEN FLUID**
ULTRASONIC MEASURING DEVICE FOR ULTRASONIC MEASUREMENT OF A FLOWING FLUID
DISPOSITIF DE MESURE PAR ULTRASONS DESTINÉ À LA MESURE PAR ULTRASONS SUR UN FLUIDE S'ÉCOULANT

(30) Priorität: 16.11.2018 EP 18206814
(43) Veröffentlichungstag der Anmeldung: 05.05.2021
(73) Patentinhaber: Levitronix GmbH, 8005 Zürich (CH)
(72) Erfinder: Bober, Maciej, 86919 Utting am Ammersee (DE); Hoffmann, Edgar, 86928 Hofstetten (DE)
(74) Vertreter: IPS Irsch AG

(56) Entgegenhaltungen:
- EP-A1- 0 036 658
- EP-A1- 0 631 758
- EP-A1- 2 072 972
- EP-A1- 2 508 851
- EP-A1- 3 489 634
- WO-A1-2011/020143
- WO-A1-2017/121443
- CN-U- 203 929 144
- JP-B1- 4 991 972
- US-A- 6 098 466

## Beschreibung

Die Erfindung betrifft eine Ultraschall-Messvorrichtung zur Messung an einem in einer Leitung strömenden Fluid gemäss dem Oberbegriff des unabhängigen Anspruchs.

Ultraschall-Messvorrichtungen zur Messung an einem in einer Leitung strömenden Fluid werden beispielsweise eingesetzt, um den Durchfluss des Fluids durch eine Leitung, beispielsweise einen flexiblen Kunststoffschlauch, zu bestimmen. Dabei ist es eine bekannte Massnahme, die Messvorrichtung als Klemmvorrichtung auszugestalten, derart dass sie auf eine flexible Leitung aufgeklemmt werden kann, bzw. dass die Leitung von der Messvorrichtung eingeklemmt wird. Die Leitung mit dem darin strömenden Fluid wird dann mit Ultraschallsignalen beaufschlagt. Nach Durchlaufen der Leitung und des Fluids werden die Ultraschallsignale von einem Ultraschallwandler empfangen und das empfangene Signal ausgewertet.

Diese nicht invasive Methode der Messung an einem strömenden Fluid wird insbesondere bei solchen hochreinen oder sehr empfindlichen Fluiden verwendet, bei denen ein Kontakt zwischen dem Fluid und der Messvorrichtung vermieden werden soll, beispielsweise, damit das Fluid nicht kontaminiert wird. Als Beispiele seien hier die Pharmaindustrie und die biotechnologische Industrie genannt. Hier werden häufig Lösungen und Suspensionen hergestellt und gefördert, bei denen eine sehr hohe Anforderung an die Reinheit und/oder an die Unversehrtheit des Fluids gestellt wird. Häufig müssen derartige Fluide sogar unter sterilen Bedingungen behandelt werden. Weiter Beispiele für die Anwendung solcher nicht invasiven Messungen an einem strömenden Fluid finden sich in der Medizin oder in der Lebensmittelindustrie. Auch in der Halbleiterindustrie werden nicht invasive Messungen an strömenden Fluiden eingesetzt. Hier ist es ein weiterer Aspekt, dass die zu messenden Substanzen häufig chemisch hoch aggressiv sind, beispielsweise sind die Substanzen Säuren oder Laugen wie Schwefelsäure, Salzsäure, Salpetersäure oder Ammoniakwasser.

Eine solche Ultraschall-Messvorrichtung, die insbesondere für die nicht invasive Messung an hochreinen Substanzen geeignet ist, ist der als Klemmvorrichtung ausgestaltete Flussmesser, welcher von der Anmelderin unter dem Handelsnamen LEVIFLOW angeboten und vertrieben wird. Diese Ultraschallmessvorrichtung hat zwei Gehäuseteile die gelenkig miteinander verbunden sind. Im geöffneten Zustand wird die flexible oder deformierbare Leitung, an welcher gemessen werden soll, in das Gehäuse eingelegt. Anschliessend werden die beiden Gehäuseteile zusammengeklappt und aneinander fixiert, sodass die Leitung durch eine Klemmverbindung in dem Gehäuse fixiert ist. In dem Gehäuse sind zwei Ultraschallwandler vorgesehen, von denen jeder ein Ultraschallsignal aussenden und empfangen kann. Dabei ist ein erster Ultraschallwandler auf der einen Seite der eingeklemmten Leitung angeordnet und ein zweiter Ultraschallwandler auf der anderen Seite der Leitung.

Die beiden Ultraschallwandler sind bezüglich der Strömungsrichtung des Fluids zueinander versetzt angeordnet und dabei so ausgerichtet, dass der erste Ultraschallwandler ein von dem zweiten Ultraschallwandler gesendetes Signal empfangen kann, und der zweite Ultraschallwandler ein von dem ersten Ultraschallwandler gesendetes Signal empfangen kann. Durch den Versatz zueinander sind dabei die beiden Ultraschallwandler so ausgerichtet, dass sie ihre Ultraschallsignale jeweils schräg zur Strömungsrichtung des Fluids aussenden, wobei der eine Ultraschallwandler das Signal schräg mit der Strömungsrichtung aussendet, während der andere Ultraschallwandler das Signal schräg gegen die Strömungsrichtung aussendet. Nun wird mit dem ersten Ultraschallwandler ein Messsignal ausgesendet, das von dem zweiten Ultraschallwandler empfangen wird, und dann wird von dem zweiten Ultraschallwandler ein Messsignal ausgesendet, das von dem ersten Ultraschallwandler empfangen wird.

Das schräg in Strömungsrichtung ausgesendete Messsignal wird in der Strömung beschleunigt und das schräg gegen die Strömungsrichtung ausgesendete Messsignal wird durch die Strömung abgebremst. Die Laufzeitdifferenz der beiden Messsignale ist proportional zur Strömungsgeschwindigkeit des Fluids, sodass sich aus dieser Laufzeitdifferenz der Durchfluss durch die flexible Leitung ermitteln lässt.

Es sind auch Ultraschall-Messvorrichtungen für die nicht invasive Durchflussmessung an Fluiden bekannt, welche vier Ultraschallwandler aufweisen die X-förmig angeordnet sind. Das Messprinzip ist das gleiche. Die vier Ultraschallwandler bilden zwei Paare, die jeweils Ultraschallsignale miteinander austauschen können. Dabei sind die Ultraschallwandler so angeordnet, dass die Ultraschallsignale schräg zur Strömungsrichtung ausgesendet werden, wobei jedes Paar in und gegen die Strömungsrichtung messen kann. Aus den Laufzeitdifferenzen lässt sich dann wiederum der Durchfluss bestimmen.

Auch wenn sich diese Arten von Ultraschall-Messvorrichtungen in der Praxis bewährt haben, so gibt es dennoch im Hinblick auf immer höhere Anforderungen, beispielsweise an die Messgenauigkeit oder an die Reproduzierbarkeit der Messungen, Verbesserungsbedarf.

Aus der EP 2 508 851 A1, der EP 0 036 658 A1, oder der JP 4 991972 B1 sind Ultraschall-Messvorrichtungen mit in schließbare Gehäuse integrierten Ultraschallwandlern bekannt.

Ausgehend von diesem Stand der Technik ist es daher eine Aufgabe der Erfindung, eine Ultraschall-Messvorrichtung zur Messung an einem in einer Leitung strömenden Fluid vorzuschlagen, welche eine sehr genaue Ermittlung von Kenngrössen ermöglicht, die von der Schallausbreitung in dem Fluid abhängig sind. Im speziellen soll die Ultraschall-Messvorrichtung auch zum Ermitteln des Durchflusses des Fluids geeignet sein.

Der diese Aufgabe lösenden Gegenstand der Erfindung ist durch die Merkmale des unabhängigen Patentanspruchs gekennzeichnet.

Erfindungsgemäss wird also eine Ultraschall-Messvorrichtung vorgeschlagen zur Messung an einem in einer Leitung strömenden Fluid, mit einem schliessbaren Gehäuse, welches einen durchgängigen Messkanal mit einer Mittelachse aufweist, die eine Strömungsrichtung festlegt, wobei das Gehäuse derart zur lösbaren Befestigung an der Leitung ausgestaltet ist, dass im geschlossenen Zustand des Gehäuses der Messkanal die Leitung aufnehmen und bezüglich des Gehäuses fixieren kann, sodass das Fluid den Messkanal in der Strömungsrichtung durchströmen kann, wobei im Gehäuse ferner mindestens vier Ultraschallwandler zum jeweiligen Aussenden und Empfangen von Ultraschallsignalen vorgesehen sind, nämlich mindestens zwei erste Ultraschallwandler sowie zwei zweite Ultraschallwandler, wobei die ersten Ultraschallwandler ein erstes Wandlerpaar bilden, und eine erste Messstrecke definieren, über welche die beiden ersten Ultraschallwandler Ultraschallsignale miteinander austauschen können, und wobei die beiden zweiten Ultraschallwandler ein zweites Wandlerpaar bilden, und eine zweite Messtrecke definieren, über welche die beiden zweiten Ultraschallwandler Ultraschallsignale miteinander austauschen können, und wobei ferner die Ultraschallwandler derart angeordnet und ausgerichtet sind, dass sowohl die erste Messstrecke als auch die zweite Messstrecke jeweils schräg zur Strömungsrichtung verlaufen, und wobei die Ultraschallwandler derart angeordnet und ausgerichtet sind, dass eine erste Messebene, welche durch die Mittelachse des Messkanals und die erste Messstrecke festgelegt ist, verschieden ist von einer zweiten Messebene, welche durch die Mittelachse des Messkanals und die zweite Messstrecke festgelegt ist.

Die erfindungsgemässe Ultraschall-Messvorrichtung umfasst also mindestens vier Ultraschallwandler, wobei jeweils zwei Ultraschallwandler ein Wandlerpaar bilden, das Ultraschallsignale schräg zur Strömungsrichtung miteinander austauschen kann. Das heisst, die beiden Ultraschallwandler, die ein Wandlerpaar bilden, sind jeweils so angeordnet und ausgerichtet, dass der eine Ultraschallwandler des Wandlerpaares ein von dem anderen Ultraschallwandler des gleichen Wandlerpaares ausgesandtes Signal empfangen kann und umgekehrt der andere Ultraschallwandler ein von dem einen Ultraschallwandler ausgesendetes Signal empfangen kann. Hierdurch kann, wie bereits eingangs erläutert, ein Messsignal empfangen werden, welches schräg in Strömungsrichtung ausgesendet wurde, sowie ein Messsignal, das schräg gegen die Strömungsrichtung ausgesendet wurde. Aus der Laufzeitdifferenz dieser beiden Messsignale lässt sich dann die Strömungsgeschwindigkeit des Fluids ermitteln.

Dadurch, dass erfindungsgemäss die Ultraschallwandler in zwei unterschiedlichen Messebenen angeordnet sind, lässt sich der Messkanal deutlich besser bzw. deutlich homogener mit Ultraschall beaufschlagen, als bei den Vorrichtungen wie sie aus dem Stand der Technik bekannt sind, bei denen alle Ultraschallwandler in nur einer Messebene angeordnet sind. Mit der erfindungsgemässen Ultraschall-Messvorrichtung lässt sich der Messkanal zumindest in sehr guter Näherung vollständig mit Ultraschall beaufschlagen, wodurch eine deutlich genauere und auch besser reproduzierbare Messung resultiert. So wird beispielsweise der störende Einfluss von inhomogenen Strömungsverhältnissen im Messkanal, die z. B. durch lokale Wirbelbildung verursacht werden können, zumindest deutlich reduziert, wenn nicht ganz eliminiert. Die zumindest näherungsweise vollständige Beaufschlagung des gesamten Messvolumens mit Ultraschallsignalen führt somit zu einer deutlich genaueren und zuverlässigeren Messung. Hierfür ist es ein wesentlicher Aspekt, dass die Ultraschallwandler in mindestens zwei unterschiedlichen Messebenen angeordnet sind.

Mit einer Messebene ist dabei diejenige Ebene gemeint, welche durch die Mittelachse des Messkanals und den Richtungsvektor der Messtrecke definiert ist. Für einen gegebenen Ultraschallwandler ist der Richtungsvektor der zugehörigen Messstrecke üblicherweise die Flächennormale auf dem Mittelpunkt der Sende- und Empfangsfläche des Ultraschallwandlers. Dieser Richtungsvektor erstreckt sich in die gleiche Richtung wie der Schallvektor des Ultraschallwandlers, welcher in die Hauptausbreitungsrichtung des von dem Ultraschallwandler ausgesendeten Ultraschallsignals zeigt. Falls die beiden Ultraschallwandler, welche gemeinsam ein Wandlerpaar bilden, auf unterschiedlichen Seiten des Messkanals angeordnet sind, d.h. wenn die Mittelachse des Messkanals zwischen diesen beiden Ultraschallwandlern angeordnet ist, dann ist die zugehörige Messstrecke, welche gemeinsam mit der Mittelachse die zugehörige Messebene definiert, die Verbindungslinie zwischen den Mittelpunkten der Sende- und Empfangsflächen der beiden Ultraschallwandler.

Die vom Stand der Technik bekannten Anordnungen, einschliesslich derer, bei denen vier Ultraschallwandler vorgesehen sind, verwenden nur eine einzige Messebene, was zur Folge hat, dass das Volumen des Messkanals bei der jeweiligen Messung nicht vollständig mit Ultraschall beaufschlagt wird, denn es gibt immer Bereiche im Messkanal, die nur sehr schwach oder auch gar nicht mit Ultraschall beaufschlagt werden. Daher ermöglicht die erfindungsgemässe Anordnung, bei welcher die Ultraschallsensoren in mindestens zwei unterschiedlichen Messebenen messen eine deutlich bessere und homogenere Beaufschlagung des Messkanals mit Ultraschall und somit eine wesentlich genauerer, stabilere und zuverlässigere Messung.

Gemäss einer bevorzugten Ausführungsform sind mindestens sechs Ultraschallwandlern vorgesehen, nämlich die beiden ersten Ultraschallwandler, die beiden zweiten Ultraschallwandler, sowie zwei dritte Ultraschallwandler, wobei die dritten Ultraschallwandler ein drittes Wandlerpaar bilden, und eine dritte Messstrecke definieren, über welche die beiden dritten Ultraschallwandler Ultraschallsignale miteinander austauschen können, und wobei die dritten Ultraschallwandler derart angeordnet und ausgerichtet sind, dass eine dritte Messebene, welche durch die Mittelachse des Messkanals und die dritte Messstrecke festgelegt ist, verschieden von der ersten Messebene oder verschieden von der zweiten Messebene ist.

Durch die Verwendung von mindestens sechs Ultraschallwandlern, welche drei Wandlerpaare bilden, lässt sich die Genauigkeit und die Zuverlässigkeit der Messung noch weiter steigern.

Bei dieser Ausführungsform ist es besonders bevorzugt, wenn die dritte Messebene verschieden von der ersten Messebene und verschieden von der zweiten Messebene ist. Dadurch wird nämlich in drei jeweils voneinander verschiedenen Messebenen gemessen, wodurch sich eine besonders gute und homogene Beaufschlagung des Messkanals mit Ultraschall realisieren lässt.

Gemäss einer bevorzugten Ausgestaltung weist der Messkanal im geschlossenen Zustand des Gehäuses senkrecht zu seiner Mittelachse einen n-eckigen Querschnitt auf und wird durch n Kanalflächen begrenzt, wobei n eine ganze Zahl ist, die grösser oder gleich vier ist.

Durch den n-eckigen Querschnitt des Messkanals wird der Messkanal ausschliesslich durch planare - also ungekrümmte - Flächen, nämlich die n Kanalflächen, begrenzt. Dadurch liegt die in den Messkanal eingelegte Leitung nach dem Schliessen des Gehäuses möglichst vollflächig an den Kanalflächen an. Dies hat den Vorteil, dass mit Luft gefüllte Leerräume zwischen der Leitung und den Kanalflächen des Messkanals minimiert oder sogar vollständig vermieden werden können. Da Luft ein sehr schlechter Ultraschallleiter ist, kann durch das Vermeiden solcher Luftvolumina die Messgenauigkeit erhöht werden. Zudem ermöglichen die planaren, also ungekrümmten Kanalflächen eine einfachere bzw. bessere Einspeisung des jeweiligen Ultraschallsignals in den Messkanal, weil die Ultraschallwellen dann im Wesentlichen nur auf planare, nicht aber auf gekrümmte Oberflächen bzw. Grenzflächen treffen. Ferner wird dadurch auch eine Linsenwirkung vermieden, eine Streuung oder eine Fokussierung des Ultraschallsignals bzw. -strahls an den Grenzflächen, welche das Signal passiert, wird zumindest deutlich reduziert oder sogar ganz vermieden.

Falls n gleich vier ist, der Messkanal also senkrecht zu seiner Mittelachse einen viereckigen Querschnitt aufweist, ist der Messkanal vorzugsweise so ausgestaltet, dass die Leitung bei geöffnetem Gehäuse in einen V-förmigen Querschnitt eingelegt werden kann. Das heisst, der Messkanal ist so ausgestaltet, dass er bei geöffnetem Gehäuse eine möglichst grosse Öffnung für die einzulegende Leitung bietet. Im Unterschied zu einer viereckigen Ausgestaltung, bei welcher die Leitung im geöffneten Zustand des Gehäuses in einen U-förmigen Querschnitt des Messkanals eingelegt werden muss, lässt sich mit der V-förmigen Ausgestaltung ein deutlich einfacheres Einlegen verwirklichen. Muss die Leitung in einen U-förmigen Querschnitt des Messkanals eingelegt werden, so resultiert üblicherweise eine ungünstige und asymmetrische Verformung der Leitung, die zu inhomogenen Strömungsverhältnissen führen kann. Auch lässt es sich bei der V-förmigen Ausgestaltung im geöffneten Zustand des Gehäuses vermeiden, dass die Leitung an senkrecht ausgerichteten Kanalflächen entlang rutschen muss.

Ist der Messkanal mit einem n-eckigen Querschnitt mit n grösser als vier ausgestaltet, so ist der Öffnungswinkel zwischen benachbarten Kanalflächen jeweils grösser als 90°, sodass hier die gleichen Vorteile resultieren wie bei der V-förmigen Ausgestaltung des viereckigen Messkanals.

Gemäss einer besonders bevorzugten Ausgestaltung weist der Messkanal im geschlossenen Zustand des Gehäuses senkrecht zu seiner Mittelachse einen n-eckigen Querschnitt auf, und wird durch n Kanalflächen begrenzt, wobei n gleich sechs oder gleich acht ist. Durch eine sechs- oder achteckigen Ausgestaltung des Messkanals lässt sich der negative Einfluss von störenden Wandwellen auf die Messung zumindest drastisch reduzieren. Solche Wandwellen sind Schallsignale, die über die Wandung des Gehäuses bzw. durch die Wandungen, welche den Messkanal begrenzen, von einem sendenden Ultraschallwandler zu einem empfangenden Ultraschallwandler gelangen, ohne dabei den Messkanal zu durchqueren. Solche Wandwellen stellen Störsignale dar, welche die Genauigkeit und die Zuverlässigkeit der Messung negativ beeinflussen. Mit einer sechs- oder achteckigen Geometrie des Messkanals kann dieser Störeinfluss zumindest drastisch reduziert werden.

Vorzugsweise sind die Ultraschallwandler derart angeordnet und ausgerichtet, dass sie mindestens zwei unterschiedliche und nicht parallele Kanalflächen mit Ultraschallsignalen beaufschlagen können. Dies ist besonders vorteilhaft für eine möglichst vollständige Beaufschlagung des Messkanals mit Ultraschall. Bei dieser Anordnung steht jede Messebene senkrecht auf einer der Kanalflächen.

Im Hinblick auf eine möglichst komplette Beaufschlagung des Messvolumens mit Ultraschall ist es vorteilhaft, wenn die Ultraschallwandler derart angeordnet und ausgerichtet sind, dass jedes Wandlerpaar jeweils eine andere Kanalfläche mit Ultraschallsignalen beaufschlagen kann. Bei einer Ausgestaltung mit beispielsweise sechs Ultraschallwandlern werden dann insgesamt drei verschiedene Kanalflächen mit Ultraschall beaufschlagt. Vorzugsweise ist dabei keine dieser drei Kanalflächen parallel zu einer anderen dieser drei Kanalflächen.

Eine weitere vorteilhafte Massnahme besteht darin, dass die Ultraschallwandler derart angeordnet und ausgerichtet sind, dass jeder Ultraschallwandler jeweils eine andere Kanalfläche mit Ultraschallsignalen beaufschlagen kann. Die Anzahl der mit Ultraschall beaufschlagten Kanalflächen ist dann gleich der Anzahl der Ultraschallwandler. Eine mögliche Anordnung ist es dabei, dass jeweils die beiden Ultraschallwandler, die ein Wandlerpaar bilden, zueinander parallele Kanalflächen mit Ultraschallsignalen beaufschlagen.

Gemäss einer bevorzugten Ausgestaltung ist die Anzahl der Ultraschallwandler gleich der Anzahl der Kanalflächen. Dies ist jedoch nicht notwendigerweise so.

Eine weitere bevorzugte Massnahme ist es, dass die beiden dritten Ultraschallwandler so angeordnet und ausgerichtet sind, dass die dritte Messstrecke senkrecht zur Mittelachse des Messkanals verläuft. Über die dritte Messstrecke lässt sich somit ein senkrecht zur Strömungsrichtung fortschreitendes Messsignal aussenden und empfangen. Dies hat den Vorteil, dass die Laufzeit dieses Messsignals - zumindest in sehr guter Näherung - von der Strömungsgeschwindigkeit des Fluids in der Leitung unabhängig ist. Somit lassen sich durch dieses Messsignal Kenngrössen des Fluids ermitteln, welche von der Schallgeschwindigkeit oder der Schalldämpfung in dem Fluid abhängig sind. Hierdurch erweitern sich die Flexibilität und die möglichen Anwendungen der Messvorrichtung ganz erheblich. Zudem lassen sich aus Änderungen in der Laufzeit und/oder in der Dämpfung des senkrecht zur Strömungsrichtung fortschreitenden Messsignals Änderungen in dem Fluid, beispielsweise eine Änderung der Konzentration einer Komponente des Fluids, erkennen.

Auch sind solche Ausgestaltungen möglich, bei denen mindestens zwei der Ultraschallwandler jeweils mit einer gekrümmten Sende- und Empfangsfläche ausgestaltet sind. Dazu können die Ultraschallwandler beispielsweise als Ringsegment oder auch anderweitig gekrümmt ausgestaltet sein

Besonders bevorzugt ist die Ultraschall-Messvorrichtung als Klemmvorrichtung für eine Klemmverbindung mit der Leitung ausgestaltet, mit einem ersten Gehäuseteil, und mit einem zweiten Gehäuseteil, wobei das erste Gehäuseteil und das zweite Gehäuseteil mittels eines Gelenks gelenkig miteinander verbunden sind, und im geschlossenen Zustand des Gehäuses gemeinsam den Messkanal begrenzen. Im geöffneten Zustand kann dann die Leitung in den Messkanal eingelegt werden. Die beiden Gehäuseteile werden anschliessend einfach zusammengeklappt und miteinander verriegelt, sodass in diesem geschlossenen Zustand die Ultraschall-Messvorrichtung auf die Leitung geklemmt ist, wodurch die Leitung bezüglich des Gehäuses fixiert ist.

Gemäss einer bevorzugten Ausgestaltung ist von jedem Wandlerpaar jeweils einer der beiden Ultraschallwandler in dem ersten Gehäuseteil angeordnet ist, und der andere der beiden Ultraschallwandler in dem zweiten Gehäuseteil angeordnet ist. Bei dieser Ausgestaltung ist also von jedem Wandlerpaar jeweils einer der beiden Ultraschallwandler lateral auf der einen Seite des Messkanals angeordnet, und der andere der beiden Ultraschalwandler ist lateral auf der anderen Seite des Messkanals angeordnet, sodass die Mittelachse des Messkanals zwischen diesen beiden Ultraschallwandlern des Wandlerpaares verläuft.

Insbesondere bei dieser Ausgestaltung ist es bevorzugt, dass das Gelenk ein erstes Gelenkteil und ein zweites Gelenkteil umfasst, wobei das erste Gelenkteil drehfest mit dem ersten Gehäuseteil verbunden ist, und das zweite Gelenkteil drehfest mit dem zweiten Gehäuseteil verbunden ist, und wobei das erste Gelenkteil und das zweite Gelenkteil derart ausgestaltet und angeordnet sind, dass mindestens eine Signalleitung von dem ersten Gehäuseteil durch das Innere der Gelenkteile zu dem zweiten Gehäuseteil führbar ist.

Gemäss einer anderen Ausgestaltung sind entweder alle Ultraschallwandler in dem ersten Gehäuseteil angeordnet, oder alle Ultraschallwandler sind in dem zweiten Gehäuseteil angeordnet. Die beiden Ultraschallwandler, die ein Wandlerpaar bilden, tauschen dann jeweils Ultraschallsignale über eine Reflexion miteinander aus. Beispielsweise sendet einer der ersten Ultraschallwandler ein Messsignal entlang der ersten Messtrecke schräg zur Strömungsrichtung auf eine der Kanalflächen aus. Das Messsignal durchläuft den Messkanal schräg zur Strömungsrichtung, beispielsweise schräg in Strömungsrichtung, wird an der gegenüberliegenden Kanalfläche reflektiert und gelangt dann zu dem anderen der beiden ersten Ultraschallwandler. Dieser kann ebenfalls ein Messsignal aussenden, welches dann schräg gegen die Strömungsrichtung läuft, an der gegenüberliegenden Kanalfläche reflektiert wird, und dann von dem erstgenannten der beiden ersten Ultraschallwandler empfangen wird.

Dabei ist es auch möglich, an denjenigen Kanalflächen, an denen die Ultraschallsignale reflektiert werden, zusätzliche Reflektoren vorzusehen.

Natürlich sind auch Mischformen dieser beiden Ausgestaltungen möglich, bei denen mindestens ein Wandlerpaar Ultraschallsignale über Reflexion miteinander austauscht, und ein anderes Wandlerpaar Ultraschallsignale direkt, also ohne dazwischenliegende Reflexion miteinander austaucht.

Eine weitere bevorzugte Massnahme besteht darin, dass der Messkanal im geschlossenen Zustand des Gehäuses einen Eingangsbereich, einen Mittelbereich und einen Ausgangsbereich aufweist, die in Strömungsrichtung gesehen hintereinander angeordnet sind, wobei der Eingangsbereich und der Ausgangsbereich jeweils einen kreisförmigen Querschnitt senkrecht zur Mittelachse aufweisen, wobei der Mittelbereich einen n-eckigen Querschnitt senkrecht zur Mittelachse aufweist, wobei n eine ganze Zahl ist, die grösser oder gleich vier ist, und wobei der n-eckige Querschnitt des Mittelbereichs kontinuierlich in den kreisförmigen Querschnitt sowohl des Eingangsbereichs als auch des Ausgangsbereichs übergeht.

Durch den umlaufenden und sanften Übergang von dem runden Querschnitt sowohl des Eingangsbereichs als auch des Ausgangsbereichs auf den n-eckigen Querschnitt des Mittelbereichs, an welchem die Messung erfolgt, wird eine abrupte Querschnittsänderung der in den Messkanal eingelegten Leitung vermieden. Dies führt zu einer besonders homogenen Durchströmung des Messvolumens im Messkanal. Alle partiellen Strömungsvektoren werden auf geordneten Bahnen an den Ultraschallwandlern vorbei geführt. Durch den sanften Querschnittswechsel werden unerwünschte Turbulenzen oder sonstige ungünstige Strömungsverhältnisse im Messkanal vermieden.

Zur Ultraschallmessung an einem durch die Leitung strömenden Fluid wird beispielsweise wie folgt vorgegangen:
- Einlegen der Leitung in den Messkanal der Ultraschall-Messvorrichtung
- Befestigen des Gehäuses der Ultraschall-Messvorrichtung an der Leitung derart, dass die Leitung im Messkanal aufgenommen und bezüglich des Gehäuses fixiert wird;
- Aussenden und Empfangen von Messsignalen mittels der mindestens vier Ultraschallwandlern
- Übermitteln der empfangenen Messsignale an eine Auswerteeinheit;
- Ermitteln mindestens einer Kenngrösse, welche von der Schallausbreitung in dem Fluid abhängig ist, mit Hilfe der empfangenen Messsignale.

Vorzugsweise wird die Kenngrösse mittels der Laufzeit eines Messsignals, oder einer Laufzeitdifferenz zweier Messsignale oder mittels der Dämpfung eines Messsignals ermittelt. Dadurch, dass sowohl die Dämpfung als auch die Laufzeit der Messsignale berücksichtigt werden können, vergrössert sich der Anwendungsbereich. Zudem ist es auch möglich, die Frequenz bzw. die Frequenzverschiebung eines Messsignals zur Ermittlung der oder einer Kenngrösse heranzuziehen. Die Frequenzverschiebung des Messsignals kann beispielsweise durch den Dopplereffekt verursacht werden.

Beispielsweise wird eine oder mehrere der folgenden Kenngrössen ermittelt: Durchfluss des Fluids durch die Leitung, Volumen- oder Massenanteil einer Komponente des Fluids, Konzentration einer in dem Fluid enthaltenen Komponente, ein Feststoffanteil in dem Fluid, optische Dichte des Fluids, Zelldichte im Fluid, Viskosität des Fluids, physikalische Dichte des Fluids, Gaskonzentration im Fluid, Änderung in der Zusammensetzung des Fluids.

Als konkrete Beispiels seien hier genannt: Die Alkoholkonzentration, beispielsweise die Methanol Konzentration, im Fluid in Volumenprozent; die Natriumhydroxid (NaOH) Konzentration im Fluid in Volumenprozent; eine Enzym- oder Eiweiss-Konzentration in Gramm pro Liter in einem biologischen Fluid, z. B. die Konzentration von Rinderserumalbumin (BSA: bovine serum albumin) oder einem anderen Globulin in Wasser; der Feststoffanteil in einer Suspension (Slurry), z. B. in einer Suspension von Siliziumdioxid (SiO₂) in Wasser, oder die Zelldichte in einem Bioreaktor, welche üblicherweise über die optische Dichte bestimmt wird, beispielsweise die optische Dichte OD₆₀₀ in einer E-Coli Zellsuspension bei einer Wellenlänge von 600 nm.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: ein Ausführungsbeispiel einer Ausgestaltung des Gehäuses einer erfindungsgemässen Ultraschall-Messvorrichtung,
- Fig. 2:: eine schematische und perspektivische Darstellung eines ersten Ausführungsbeispiels einer erfindungsgemässen Ultraschall-Messvorrichtung,
- Fig. 3:: eine weitere Darstellung des ersten Ausführungsbeispiels zur Verdeutlichung der Messebenen,
- Fig. 4 - Fig. 5:: verschiedene Varianten für die Ausgestaltung des Messkanals, jeweils in schematischer Darstellung,
- Fig. 6:: eine Variante für die Ausgestaltung der Leitung in einer schematischen Darstellung,
- Fig. 7:: eine schematische Darstellung eines zweiten Ausführungsbeispiels einer erfindungsgemässen Ultraschall-Messvorrichtung in einer zu Fig. 3 analogen Darstellung,
- Fig. 8:: eine schematische Darstellung eines dritten Ausführungsbeispiels einer erfindungsgemässen Ultraschall-Messvorrichtung in einer zu Fig. 2 analogen Darstellung.
- Fig. 9:: eine Variante für die Ausgestaltung des dritten Wandlerpaares,
- Fig. 10:: eine Variante für die Ausgestaltung des ersten und des zweiten Wandlerpaares,
- Fig. 11:: eine schematische Darstellung eines vierten Ausführungsbeispiels einer erfindungsgemässen Ultraschall-Messvorrichtung in einer zu Fig. 2 analogen Darstellung,
- Fig. 12:: eine Variante des vierten Ausführungsbeispiels,
- Fig. 13:: eine bevorzugte Ausgestaltung des Eingangsbereichs und des Ausgangsbereichs des Messkanals,
- Fig. 14:: eine bevorzugte Anordnung der Ultraschallwandler am Messkanal,
- Fig. 15:: eine Veranschaulichung verschiedener Messpfade zwischen den Ultraschallwandlern,
- Fig. 16 - Fig. 21:: Darstellungen verschiedener Impulsfolgen zum Generieren von Messsignalen, und
- Fig. 22:: eine Ausführungsform der gelenkigen Verbindung der beiden Gehäuseteile in einem Schnitt durch die Drehachse des Gelenks.

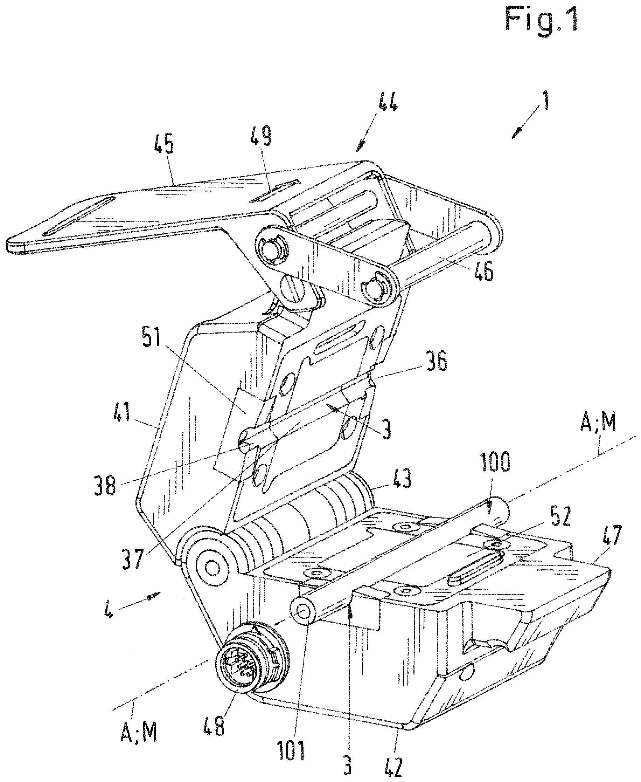

Fig. 1 zeigt in einer perspektivischen Darstellung ein Ausführungsbeispiel einer Ausgestaltung eines Gehäuses einer erfindungsgemässen Ultraschall-Messvorrichtung. Diese beispielhafte Ausgestaltung ist für alle nachfolgend beschriebenen Ausführungsbeispiele und ihre Varianten verwendbar. Die Ultraschall-Messvorrichtung ist gesamthaft mit dem Bezugszeichen 1 bezeichnet und das Gehäuse der Ultraschall-Messvorrichtung 1 ist mit dem Bezugszeichen 4 bezeichnet.

Die Ultraschall-Messvorrichtung 1 ist vorzugsweise als eine Klemmvorrichtung für eine Klemmverbindung mit einer Leitung 100 ausgestaltet, d.h. das Gehäuse 4 der Ultraschallmessvorrichtung 1 kann auf die Leitung 100 geklemmt werden, derart, dass die Leitung 100 bezüglich des Gehäuses 4 fixiert ist. Die prinzipielle Ausgestaltung des Gehäuses 4, die in Fig. 1 dargestellt ist, ist an sich bekannt, beispielsweise von den Ultraschall-Flussmessern, welche von der Anmelderin unter dem Handelsnamen LEVIFLOW angeboten und vertrieben werden

Im Folgenden wird auf den für die Praxis besonders wichtigen Fall Bezug genommen, dass die Leitung 100 eine flexible Leitung 100 ist, also eine Leitung 100, deren Wandung 101 deformierbar ist. Die flexible Leitung 100 ist beispielsweise ein Kunststoffschlauch, der aus einem Silikonkautschuk oder aus PVC besteht. Natürlich kann die Leitung 100 auch aus anderen Materialien, insbesondere aus einem anderen Kunststoff oder einem Kautschuk bestehen. Die Leitung 100 kann auch aus härteren Materialien bestehen, jedoch sollte die Leitung 100 deformierbar sein. Insbesondere sind solche Leitungen 100 geeignet, die Shore-Härten von A10 bis D93 aufweisen.

Das Gehäuse 4 ist als schliessbares Gehäuse 4 ausgestaltet und umfasst ein erstes Gehäuseteil 41 sowie ein zweites Gehäuseteil 42, welche über ein Gelenk 43 gelenkig miteinander verbunden sind. Fig. 1 zeigt das Gehäuse 4 im geöffneten Zustand. Das Gehäuse 4 weist ferner einen durchgängigen zentral angeordneten Messkanal 3 auf, welcher sich durch das gesamte Gehäuse 4 erstreckt und zur Aufnahme der Leitung 100 dient. Der Messkanal 3 weist eine Mittelachse M auf, die eine Strömungsrichtung A festlegt, in welcher ein Fluid die Leitung 100 bzw. das Gehäuse 4 durchströmt.

Üblicherweise hat der Messkanal 3 einen Eingangsbereich 36, einen Mittelbereich 37 und einen Ausgangsbereich 38, die in Strömungsrichtung A gesehen hintereinander angeordnet sind.

Das Gehäuse 4 weist ferner einen Verschlussmechanismus 44 auf, um das Gehäuse 4 zu verschliessen und damit die Leitung 100 in dem Messkanal 3 einzuklemmen. Der Verschlussmechanismus 44 ist hier am ersten Gehäuseteil 41 angeordnet und umfasst einen Bügel 46 sowie eine klappbare Lasche 45 zum Spannen des Bügels 46. Die Leitung 100 wird in den Messkanal 3 eingelegt, anschliessend werden die beiden Gehäuseteile 41, 42 zusammengeklappt, d.h. das erste Gehäuseteil 41 wird über die Leitung 100 geklappt. Der Bügel 46 wird in Eingriff mir einem Vorsprung 47 am zweiten Gehäuseteil 42 gebracht, und durch Betätigen der Lasche 45 werden die beiden Gehäuseteile 41, 42 miteinander verspannt. Das Gehäuse 4 ist dann in seinem geschlossenen Zustand, in welchem die Leitung 100 in dem Messkanal 3 eingeklemmt und somit bezüglich des Gehäuses 4 fixiert ist. Je nach Geometrie des Querschnitts des Messkanals 3 und des Querschnitts der Leitung 100 ist es dabei möglich und erwünscht, dass die Leitung 100 beim Schliessen des Gehäuses 4 deformiert wird, worauf weiter hinten noch eingegangen wird.

In dem ersten Gehäuseteil 41 ist ein erster Einsatz 51 vorgesehen, welcher eine Hälfte des Messkanals 3 über seine gesamte Länge begrenzt. In dem zweiten Gehäuseteil 42 ist ein zweiter Einsatz 52 vorgesehen, welcher die andere Hälfte des Messkanals 3 über seine gesamte Länge begrenzt. Im geschlossenen Zustand des Gehäuses 4 kommen die einander zugewandten Oberflächen des ersten Einsatzes 51 und des zweiten Einsatzes 52 aufeinander zu liegen und begrenzen dann gemeinsam den Messkanal 3, in welchen die Leitung 100 eingelegt ist.

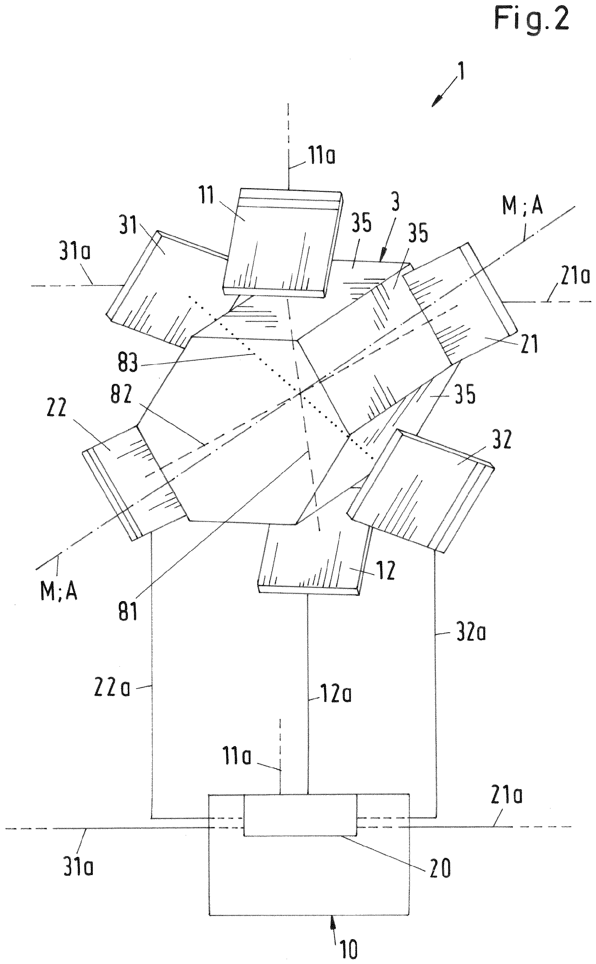

Am Gehäuse 4 ist ferner ein Anschluss 48 für ein nicht dargestelltes Verbindungskabel vorgesehen, mit welchem das Gehäuse 4 mit einer in Fig. 1 nicht dargestellten Kontrolleinrichtung 10 (Fig. 2) verbunden werden kann. Natürlich sind auch solche Ausgestaltungen möglich, bei denen die Kontrolleinrichtung 10 in das Gehäuse 4 integriert ist. Die Auswertung der Messsignale kann dann in dem Gehäuse 4 erfolgen und die mittels der Auswertung ermittelte Kenngrösse kann dann über den Anschluss 48 ausgegeben werden. Auch dient der Anschluss 48 der Energieversorgung der Ultraschall-Messvorrichtung 1.

Am Gehäuse 4 kann ferner ein Markierungselement 49 vorgesehen sein, welches die Strömungsrichtung A festlegt, in welcher das Fluid die Ultraschall-Messvorrichtung 1 durchströmen soll. Bei der in Fig. 1 dargestellten Ausführungsform ist das Markierungselement 49 als ein Pfeil ausgestaltet, welcher auf der Lasche 45 angeordnet ist und in die Strömungsrichtung A zeigt. Die Leitung 100 wird dann derart in den Messkanal 3 eingelegt, dass das Fluid den Messkanal 3 in Richtung des Pfeils 49 durchströmt.

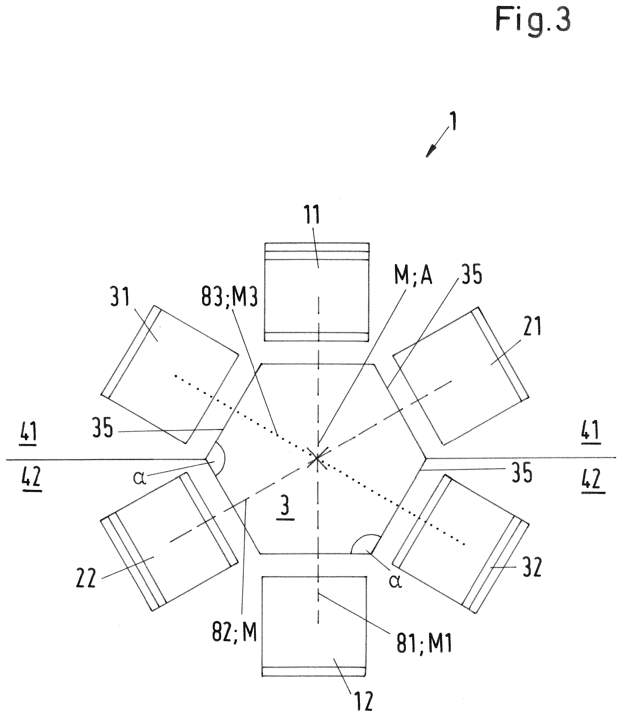

Fig. 2 zeigt in einer schematischen, perspektivischen Darstellung ein erstes Ausführungsbeispiel einer erfindungsgemässen Ultraschall-Messvorrichtung 1. Das Gehäuse 4 der Ultraschall-Messvorrichtung 1, das in Fig. 2 aus Gründen der besseren Übersicht nicht dargestellt ist, kann insbesondere wie anhand von Fig. 1 erläutert ausgestaltet sein. In Fig. 2 ist nur der Messkanal 3 bzw. die ihn in Umfangsrichtung begrenzende Fläche dargestellt. Zum besseren Verständnis zeigt Fig. 3 noch eine nicht-perspektivische Ansicht des ersten Ausführungsbeispiels in einer Ansicht in Richtung der Mittelachse M des Messkanals 3.

Bei diesem ersten Ausführungsbeispiel sind im Gehäuse 4 insgesamt sechs Ultraschallwandler 11,12, 21, 22, 31, 33 zum jeweiligen Aussenden und Empfangen von Ultraschallsignalen vorgesehen, nämlich zwei erste Ultraschallwandler 11, 12, zwei zweite Ultraschallwandler 21, 22 und zwei dritte Ultraschallwandler 31, 32. Alle Ultraschallwandler 11, 12, 21, 22, 31,32 sind im geschlossenen Zustand des Gehäuses 4 lateral bezüglich des Messkanals 3 an oder in dem ersten oder dem zweiten Einsatz 51, 52 in dem ersten Gehäuseteil 41 bzw. in dem zweiten Gehäuseteil 42 angeordnet.

Die ersten Ultraschallwandler 11, 12 bilden ein erstes Wandlerpaar und definieren eine erste Messstrecke 81, über welche die beiden ersten Ultraschallwandler 11, 12 Ultraschallsignale miteinander austauschen können.

Die zweiten Ultraschallwandler 21, 22 bilden ein zweites Wandlerpaar und definieren eine zweite Messstrecke 82, über welche die beiden zweiten Ultraschallwandler 21, 22 Ultraschallsignale miteinander austauschen können.

Die dritten Ultraschallwandler 31, 32 bilden ein drittes Wandlerpaar und definieren eine dritte Messstrecke 83, über welche die beiden dritten Ultraschallwandler 31, 32 Ultraschallsignale miteinander austauschen können.

Zur besseren Übersicht sind in Fig. 2 und Fig. 3 die erste Messstrecke 81 und die zweite Messstrecke 82 jeweils gestrichelt dargestellt, die dritte Messstrecke 83 ist punktiert dargestellt, und die Mittelachse M des Messkanals 3 ist in Fig. 2 strichpunktiert dargestellt.

Für jedes Wandlerpaar ist die durch das Wandlerpaar definierte Messstrecke 81 oder 82 oder 83 diejenige Strecke, entlang welcher sich ein Ultraschallsignal fortbewegt, um von dem einen Ultraschallwandler, der dieses Ultraschallsignal ausgesendet hat, beispielsweise 11 bzw. 21 bzw. 31 zu dem anderen Ultraschallwandler 12 bzw. 22 bzw.32 des gleichen Wandlerpaares zu gelangen, der dieses Ultraschallsignal empfängt. Üblicherweise ist für einen gegebenen Ultraschallwandler 11 oder 12 oder 21 oder 22 oder 31 oder 32 die zugehörige Messstrecke 81 oder 82 oder 83 durch einen Richtungsvektor festgelegt, welcher die Flächennormale auf dem Mittelpunkt der Sende- und Empfangsfläche dieses Ultraschallwandlers 11, 12, 21, 22, 31, 32 ist. Dieser Richtungsvektor erstreckt sich in die gleiche Richtung wie der Schallvektor des Ultraschallwandlers11, 12, 21, 22, 31, 32, welcher in die Hauptausbreitungsrichtung des von dem Ultraschallwandler 11, 12, 21, 22, 31, 32 ausgesendeten Ultraschallsignals zeigt.

Von jedem Wandlerpaar ist jeweils einer der Ultraschallwandler 11 bzw. 21 bzw. 31 in dem ersten Gehäuseteil 41 angeordnet, und der andere Ultraschallwandler 12 bzw. 22 bzw. 32 in dem zweiten Gehäuseteil 42. Das heisst jedes Wandlerpaar ist so angeordnet, dass sich der Messkanal 3 bzw. die Mittelachse M des Messkanals 3 jeweils zwischen den beiden ersten Ultraschallwandlern 11, 12 und zwischen den beiden zweiten Ultraschallwandlern 21, 22 und zwischen den beiden dritten Ultraschallwandlern 31, 32 befindet.

Bei dieser Anordnung, bei welcher die beiden Ultraschallwandler 11,21 oder 21,22 oder 31, 32, welche gemeinsam ein Wandlerpaar bilden, auf unterschiedlichen Seiten des Messkanals 3 angeordnet sind, d.h. wenn die Mittelachse M des Messkanals 3 zwischen diesen beiden Ultraschallwandlern angeordnet ist, dann ist die jeweilige zugehörige Messstrecke 81, 82 , 83, die Verbindungslinie zwischen den Mittelpunkten der Sende- und Empfangsflächen der beiden Ultraschallwandler die jeweils ein Wandlerpaar bilden.

Die Ultraschallwandler 11, 12, 21, 22, 31, 32 sind ferner so angeordnet und ausgerichtet, dass sowohl die erste Messtrecke 81 als auch die zweite Messstrecke 82 als auch die dritte Messstrecke 83 jeweils schräg zur Strömungsrichtung A verlaufen, also unter einem Winkel, der weder Null Grad noch 90° beträgt. Die beiden ersten Ultraschallwandler 11 und 12 sind bezüglich der Mittelachse M des Messkanals 3 also in Strömungsrichtung A gesehen versetzt zueinander angeordnet. Sinngemäss gleiches gilt für die beiden zweiten Ultraschallwandler 21, 22 sowie für die beiden dritten Ultraschallwandler 31, 32. Somit kann auf jeder Messstrecke 81, 82, 83 jeweils eine Messung schräg in Strömungsrichtung A und eine Messung schräg gegen die Strömungsrichtung A durchgeführt werden.

Der Messkanal 3 hat im geschlossenen Zustand des Gehäuses 4 senkrecht zu seiner Mittelachse M einen sechseckigen Querschnitt, vorzugsweise in Form eines regelmässigen Sechsecks. Somit wird der Messkanal 3 im geschlossenen Zustand des Gehäuses 4 durch insgesamt sechs Kanalflächen 35 begrenzt. Es versteht sich, dass der sechseckige Querschnitt zwar eine bevorzugte Ausgestaltung ist, aber beispielhaft zu verstehen ist. Wie weiter hinten noch erläutert, eignen sich auch andere Formen des Querschnitts für den Messkanal 3.

Erfindungsgemäss sind die Ultraschallwandler der Ultraschall-Messvorrichtung 1 so angeordnet, dass in mindestens zwei verschiedenen Messebenen M1, M2, M3 mittels Ultraschallsignalen gemessen werden kann, was im Folgenden anhand des ersten Ausführungsbeispiels näher erläutert wird.

Bei dem ersten Ausführungsbeispiel sind insgesamt drei Messebenen M1, M2 und M3 vorgesehen. Jede Messebene M1, M2, M3 ist jeweils durch die Mittelachse M des Messkanals 3 sowie eine der Messstrecken 81, 82, 83 festgelegt.

Die erste Messebene M1 ist durch die Mittelachse M des Messkanals 3 und die erste Messtrecke 81 festgelegt, das heisst, die erste Messebene M1 wird durch die Mittelachse M und den Richtungsvektor der ersten Messstrecke 81 aufgespannt. Die zweite Messebene M2 ist durch die Mittelachse M des Messkanals 3 und die zweite Messtrecke 82 festgelegt, das heisst, die zweite Messebene M2 wird durch die Mittelachse M und den Richtungsvektor der zweiten Messstrecke 82 aufgespannt. Die dritte Messebene M3 ist durch die Mittelachse M des Messkanals 3 und die dritte Messtrecke 83 festgelegt, das heisst, die dritte Messebene M3 wird durch die Mittelachse M und den Richtungsvektor der dritten Messstrecke 83 aufgespannt.

Die Mittelachse M des Messkanals 3 liegt also in jeder der Messebenen M1, M2, M3 und bildet somit die Schnittlinie aller Messebenen M1, M2, M3.

Durch die Anordnung der Ultraschallwandler 11, 12, 21, 22, 31, 32 in mindestens zwei - hier drei - verschiedenen Messebenen M1, M2, M3 lässt sich eine besonders gute, homogene und zumindest näherungsweise vollständige Beaufschlagung des gesamten Messvolumens im Messkanal 3 mit Ultraschallsignalen erzielen, wodurch sich die Genauigkeit, die Zuverlässigkeit und die Reproduzierbarkeit der Messung deutlich erhöht.

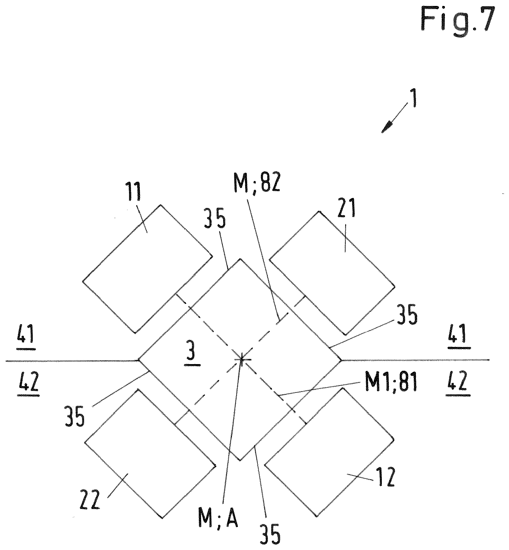

Wie dies in den Fig. 2 und Fig. 3 gut zu erkennen ist, sind bei dem ersten Ausführungsbeispiel alle drei Messebenen M1, M2, M3 voneinander verschieden was besonders vorteilhaft im Hinblick auf eine vollständige Beaufschlagung des Messvolumens mit Ultraschall ist. Es sind aber auch Ausführungsformen möglich, bei denen nur zwei Messebenen vorgesehen sind, beispielsweise Ausführungsformen mit nur vier Ultraschallwandlern (siehe z. B. Fig. 7) oder Ausführungsformen, bei denen mehr als zwei Ultraschallwandler für eine Messebene vorgesehen sind.

Bei dem ersten Ausführungsbeispiel, bei welchem der Messkanal 3 senkrecht zu seiner Mittelachse M einen sechseckigen Querschnitt hat und von sechs Kanalflächen 35 begrenzt wird, sind die sechs Ultraschallwandler 11, 12, 21, 22, 31, 32 so angeordnet und ausgerichtet, dass jeder Ultraschallwandler 11, 12, 21, 22, 31, 32 eine andere Kanalfläche 35 mit Ultraschallsignalen beaufschlagen kann. Wie dies insbesondere in Fig. 3 gut zu erkennen ist, sind die sechs Ultraschallwandler 11, 12, 21, 22, 31, 32 bezüglich der Umfangsrichtung um den Messkanal 3 herum angeordnet, sodass jede der sechs planaren Kanalflächen von genau einem der sechs Ultraschallwandler 11, 12, 21, 22, 31, 32, 35 mit Ultraschallsignalen beaufschlagbar ist.

Der sechseckige Querschnitt hat insbesondere auch den Vorteil, dass die Leitung 100 im geöffneten Zustand des Gehäuses 4 besonders einfach in den Messkanal 3 eingelegt werden kann, denn die jeweiligen Kanalflächen 35 münden unter einem stumpfen Winkel und nicht rechtwinklig in die Oberflächen der Einsätze 51, 52 ein (siehe auch Fig. 1). Auch der Winkel a, unter dem jeweils benachbarte Kanalflächen 35 aneinander stossen, ist hier jeweils ein stumpfer Winkel, also grösser als 90°.

Jeder der Ultraschallwandler 11, 12, 21, 22, 31, 32 ist über jeweils eine Signalleitung 11a, 12a, 21a, 22a, 31a bzw. 32a mit der Kontrolleinrichtung 10 signalverbunden. Über die jeweilige Signalleitung 11a, 12a, 21a, 22a, 31a bzw. 32a steuert die Kontrolleinrichtung 10 die Ultraschallwandler 11, 12, 21, 22, 31, 32 zum Aussenden von Ultraschallsignalen an und erhält die von den Ultraschallwandlern 11, 12, 21, 22, 31, 32 empfangenen Signale. Die von den Ultraschallwandlern 11, 12, 21, 22, 31, 32 empfangenen Messsignale werden an eine Auswerteeinheit 20 übermittelt, welche in die Kontrolleinrichtung 10 integriert sein kann. In der Auswerteeinheit 20 werden die empfangenen Messsignale analysiert, und es wird wenigstens eine Kenngrösse ermittelt, welche von der Schallausbreitung oder von der Schallgeschwindigkeit oder von der Schalldämpfung in dem Fluid abhängig ist. Insbesondere kann die Strömungsgeschwindigkeit des Fluids in der Leitung 100 ermittelt werden. Wie bereits erwähnt, sind auch solche Ausführungsformen möglich, bei welchen die Kontrolleinrichtung 10 mit der Auswerteeinheit 20 im Gehäuse 4 der Ultraschall-Messvorrichtung 1 angeordnet ist

Aus Gründen der besseren Übersicht sind in Fig. 3 die Kontrollvorrichtung 10 mit der Auswerteeinheit 20 und die Signalleitungen 11a, 12a, 21a, 22a, 31a, 32a nicht nochmals dargestellt.

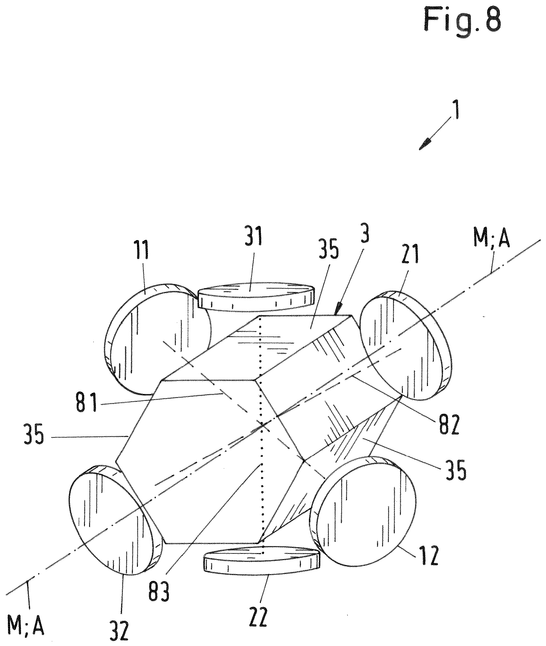

Die Ultraschallwandler 11, 12, 21, 22, 31, 32 können in jeder an sich bekannten Art ausgestaltet sein, insbesondere als piezoelektrische Wandler. Die Frequenz der Ultraschallsignale liegt typischerweise im Bereich von 100 kHz bis 20 MHz oder auch bis 30 MHz. Die Ultraschallwandler 11, 12, 21, 22, 31, 32 können beispielsweise wie in Fig. 2 und Fig. 3 dargestellt mit einer rechteckigen oder quadratischen Sende- und Empfangsfläche ausgestaltet sein oder auch wie beispielsweise in Fig. 8 gezeigt, mit einer runden Sende- und Empfangsfläche. Die Ultraschallwandler 11, 12, 21, 22, 31, 32 können insbesondere als keramische Elemente ausgestaltet sein. Es ist aber auch möglich, die Ultraschallwandler 11, 12, 21, 22, 31, 32 mit folienartigen Sende- und Empfangsflächen auszugestalten. Ist die Sende- und Empfangsfläche als Folie ausgestaltet, so eignen sich hierfür insbesondere Polymere, die einen starken piezoelektrischen Effekt zeigen, beispielsweise PVDF (Polyvinylidendifluorid)

Wenn die beiden jeweils ein Wandlerpaar bildenden Ultraschallwandler 11, 12 bzw. 21, 22 bzw. 31, 32 an unterschiedlichen Kanalflächen 35 angeordnet sind, so sind sie vorzugsweise jeweils so angeordnet und ausgerichtet, dass ihre Sende- und Empfangsflächen, die typischerweise von einem piezoelektrischen Kristall gebildet werden, parallel zueinander sind.

Wie bereits erwähnt, verlaufen alle drei Messtrecken 81, 82, 83 jeweils schräg zur Strömungsrichtung A, sodass die Hauptausbreitungsrichtung aller Ultraschallsignale auf jeder der drei Messstrecken 81, 82, 83 eine von Null verschiedene Komponente in Strömungsrichtung A und eine von Null verschiedene Komponente senkrecht zur Strömungsrichtung A hat.

Zur Bestimmung des Durchflusses des Fluids durch die Leitung 100 wird beispielsweise wie folgt vorgegangen. Nachdem die Leitung 100 in das Gehäuse 4 eingelegt ist und das Gehäuse 4 geschlossen ist, durchströmt das Fluid die Ultraschall-Messvorrichtung 1.

Der eine der ersten Ultraschallwandler 12 sendet ein Ultraschallsignal entlang der ersten Messstrecke 81 schräg und in Strömungsrichtung A aus, welches von dem anderen ersten Ultraschallwandler 11 empfangen wird. Anschliessend sendet dieser Ultraschallwandler 11 ein Ultraschallsignal entlang der ersten Messstrecke in umgekehrter Richtung und somit schräg und gegen die Strömungsrichtung A aus, welches von dem ersten Ultraschallwandler 12 empfangen wird. Die jeweils empfangenen Ultraschallsignale werden von den beiden ersten Ultraschallwandlern 11 bzw. 12 über die jeweilige Signalleitung 11a bzw. 12a als Messsignale an die Auswerteeinheit 20 übermittelt. Ein sinngemäss gleicher Signalaustausch findet zwischen den beiden zweiten Ultraschallwandlern 21, 22 sowie zwischen den beiden dritten Ultraschallwandlern 31, 32 statt. Die jeweils empfangenen Ultraschallsignale werden von den beiden zweiten und dritten Ultraschallwandlern 21, 22, 31, 32 über die jeweilige Signalleitung 21a, 22a, 31a, 32a als Messsignale an die Auswerteeinheit 20 übermittelt.

Die Auswerteeinheit 20 erhält also insgesamt sechs empfangene Messsignale, von denen drei das strömende Fluid schräg und in Strömungsrichtung A durchlaufen haben, und drei das strömende Fluid schräg und gegen die Strömungsrichtung A durchlaufen haben.

In der Auswerteeinheit 20 werden die Laufzeitdifferenzen ermittelt zwischen denjenigen Messsignalen welche durch das strömende Fluid beschleunigt wurden, und denjenigen Messsignalen, welche durch das strömende Fluid verlangsamt wurden. Diese Laufzeitdifferenz zwischen den Messsignalen in Strömungsrichtung A und den Messsignalen gegen die Strömungsrichtung A ist direkt abhängig von der Strömungsgeschwindigkeit des Fluids in der Leitung 100. Somit kann aus der Laufzeitdifferenz die Strömungsgeschwindigkeit und damit der Durchfluss des Fluids durch die Leitung 100 ermittelt werden.

Besonders vorteilhaft ist dabei, dass sowohl in Strömungsrichtung A als auch entgegen der Strömungsrichtung A jeweils drei voneinander unabhängige Messungen erfolgen, wodurch sich die Genauigkeit und die Zuverlässigkeit der Bestimmung des Durchflusses deutlich erhöhen. Da zudem die Ultraschallwandler 11, 12, 21, 22, 31, 32 um den Messkanal 3 herum angeordnet sind und in drei verschiedenen Messebenen M1, M2, M3 messen, wird das Messvolumen im Messkanal 3 vollständig mit Ultraschallsignalen beaufschlagt. Dies erhöht die Zuverlässigkeit und die Reproduzierbarkeit der Messung noch weiter. Insbesondere wird der Einfluss von Inhomogenitäten der Strömung im Messkanal 3 drastisch reduziert.

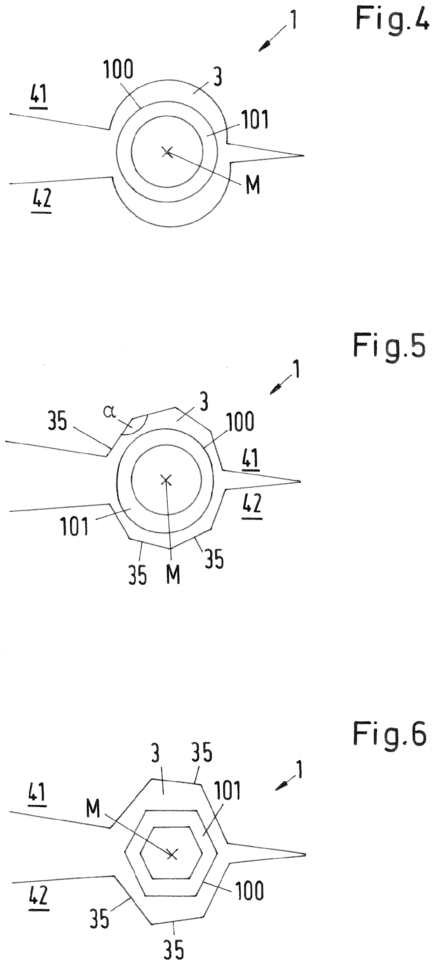

In Fig. 4 und Fig. 5 sind zwei Varianten für die Ausgestaltung des Messkanals 3 jeweils in schematischer Darstellung gezeigt. Weil es für das Verständnis ausreichend ist, sind die Ultraschallwandler in diesen Figuren nicht gezeigt. In jeder der Fig. 4 und Fig. 5 ist das Gehäuse 4 jeweils in einem Zwischenzustand gezeigt, in dem es weder vollständig geöffnet noch vollständig geschlossen ist.

Bei der in Fig. 4 gezeigten Variante ist der Messkanal 3 derart ausgestaltet, dass er im geschlossenen Zustand des Gehäuses 4 senkrecht zu seiner Mittelachse M einen runden, genauer gesagt einen kreisförmigen Querschnitt hat. Dies kann als der Grenzfall eines n-eckigen Querschnitts angesehen werden, wenn die Zahl n sehr gross gewählt wird. Ebenfalls dargestellt ist in Fig. 4 die Leitung 100 mit der Wandung 101. Auch die Leitung 100, die zwischen dem ersten Gehäuseteil 41 und dem zweiten Gehäuseteil 42 eingelegt wird, hat einen kreisförmigen Querschnitt. Es versteht sich, dass der Durchmesser des Messkanals 3 und der Aussendurchmesser der Leitung 100 derart aufeinander abgestimmt sind, dass die Leitung 100 bei geschlossenem Gehäuse 4 eingeklemmt und somit sicher bezüglich des Gehäuses 4 im Messkanal 3 fixiert ist. Die nicht dargestellten Ultraschallwandler sind in sinngemäss gleicher Weise wie vorangehend beschrieben um den Messkanal 3 herum angeordnet.

Bei der in Fig. 5 dargestellten Variante hat der Messkanal 3 im geschlossenen Zustand des Gehäuses 4 senkrecht zu seiner Mittelachse M einen achteckigen Querschnitt, das heisst der Messkanal 3 wird von insgesamt acht Kanalflächen 35 begrenzt. Bei dieser Ausgestaltung ist es nicht notwendig, aber durchaus möglich, dass an jeder der acht Kanalflächen 35 ein Ultraschallwandler vorgesehen ist. Bei der Variante gemäss Fig. 5 sind sowohl Ausgestaltungen mit vier Ultraschallwandlern möglich, nämlich mit den beiden ersten Ultraschallwandlern 11, 12 und den beiden zweite Ultraschallwandlern 21, 22, als auch Ausgestaltungen mit insgesamt sechs Ultraschallwandlern, bei denen zusätzlich noch die beiden dritten Ultraschallwandler 31, 32 vorgesehen sind. Es versteht sich, dass auch Ausgestaltungen mit mehr als sechs Ultraschallwandlern möglich sind.

Bezüglich des Messkanals 3 sind solche Ausgestaltungen bevorzugt, bei denen der Messkanal 3 im geschlossenen Zustand des Gehäuses 4 senkrecht zu seiner Mittelachse M einen n-eckigen Querschnitt aufweist und durch n Kanalflächen 35 begrenzt wird, wobei n eine natürliche Zahl ist, die grösser oder gleich vier ist. Jede der Kanalflächen 35 ist vorzugsweise planar, also ungekrümmt ausgestaltet.

Durch den n-eckigen Querschnitt des Messkanals 3 liegt die in den Messkanal 3 eingelegte Leitung 100 nach dem Schliessen des Gehäuses 4 möglichst vollflächig an den Kanalflächen 35 an. Dadurch lassen sich mit Luft gefüllte Leerräume zwischen der Leitung 100 und den Kanalflächen 35 minimieren oder sogar vollständig vermieden werden können. Da Luft ein sehr schlechter Ultraschallleiter ist, kann durch das Vermeiden solcher Luftvolumina die Messgenauigkeit erhöht werden. Zudem ermöglichen die planaren, also ungekrümmten Kanalflächen 35 eine einfachere bzw. bessere Einspeisung der Ultraschallsignale in den Messkanal 3, weil die Ultraschallwellen dann im Wesentlichen nur auf planare, nicht aber auf gekrümmte Oberflächen bzw. Grenzflächen treffen.

Für n grösser als vier resultiert ferner der bereits für die sechseckige Ausgestaltung beschriebene Vorteil, dass die Leitung 100 im geöffneten Zustand des Gehäuses 4 besonders einfach in den Messkanal 3 eingelegt werden kann, denn die jeweiligen Kanalflächen 35 münden unter einem stumpfen Winkel und nicht rechtwinklig in die Oberflächen der Einsätze 51, 52. Insbesondere ist der Winkel α (Fig. 5), unter dem benachbarte Kanalflächen 35 aneinander stossen, jeweils grösser als 90°.

Der Winkel a, unter dem benachbarte Kanalflächen 35 aneinander stossen, muss nicht für alle Kanalflächen 35 gleich sein, das heisst der n-eckige Querschnitt des Messkanals 3 muss nicht in Form eines regelmässigen n-Ecks ausgestaltet sein, auch wenn die Form eines regelmässigen n-Eck als Querschnitt bevorzugt ist.

Auch ist es nicht notwendig, dass bei der n-eckigen Ausgestaltung des Querschnitts des Messkanals 3, die Zahl n eine gerade Zahl ist. Es sind auch solche Ausführungsformen möglich, bei welchen der Messkanal 3 beispielsweise einen fünfeckigen oder einen siebeneckigen Querschnitt senkrecht zu seiner Mittelachse M aufweist.

Die Gesamtanzahl der Ultraschallwandler 11, 12, 21, 22, 31, 32 kann gleich gross sein wie die Anzahl n der Kanalflächen 35, es ist aber insbesondere auch möglich, dass die Gesamtanzahl der Ultraschallwandler kleiner ist als die Anzahl n der Kanalflächen 35.

Es sind auch solche Ausgestaltungen möglich, bei welchen die Gesamtzahl der Ultraschallwandler 11, 12, 21, 22, 31, 32 grösser ist als die Anzahl n der Kanalflächen 35. Beispielsweise ist es möglich, an einer Kanalfläche 35 zwei Ultraschallwandler vorzusehen, die zu unterschiedlichen Wandlerpaaren gehören, wobei dann vorzugsweise diese beiden Ultraschallwandler in unterschiedlichen Orientierungen zu der Kanalfläche 35 angeordnet sind , sodass diese beiden Ultraschallwandler die Kanalfläche 35 unter verschiedenen Winkeln mit Ultraschallsignalen beaufschlagen können.

Bei solchen Ausgestaltungen, bei denen die beiden Ultraschallwandler 11, 12 bzw. 21, 22 bzw. 31, 32, die jeweils ein Wandlerpaar bilden, auf unterschiedlichen Seiten des Messkanals 3 angeordnet sind, also derart, dass die Mittelachse M des Messkanals 3 zwischen diesen beiden Ultraschallwandlern liegt, ist es bevorzugt, dass die Ultraschallwandler derart angeordnet und ausgerichtet ist, dass jeder Ultraschallwandler 11, 12, 21, 22, 31, 32 jeweils eine andere Kanalfläche 35 mit Ultraschallsignalen beaufschlagen kann. Das heisst, vorzugsweise ist an keiner der Kanalflächen 35 mehr als ein Ultraschallsensor vorgesehen.

Es versteht sich, dass beim Einlegen und/oder beim Schliessen des Gehäuses 4, die Leitung 100 derart deformiert wird, dass ihr Querschnitt demjenigen des Messkanals 3 entspricht.

Fig. 6 zeigt in einer zu den Fig. 4 und Fig. 5 analogen Darstellung eine Variante, bei welcher die Leitung 100, welche in den Messkanal 3 eingelegt wird, einen n-eckigen Querschnitt, hier einen sechseckigen Querschnitt hat. Es ist also durchaus auch möglich, eine Leitung 100 zu verwenden, deren Querschnitt (Profil) nicht rund sondern n-eckig ist. Dabei ist es bevorzugt, wenn die Anzahl der Ecken des Querschnitts der Leitung 100 der Anzahl n der Ecken des Querschnitts des Messkanals 3 entspricht. In der in Fig. 6 gezeigten Variante ist der Messkanal 3 mit einem sechseckigen Querschnitt senkrecht zu seiner Mittelachse M ausgestaltet. Eine mit einem n-eckigen Profil ausgestaltete Leitung 100 hat den Vorteil, dass noch weniger Kraft benötigt wird, um die Leitung 100 in den Messkanal 3 einzulegen und das Gehäuse 4 zu verschliessen.

Es versteht sich, dass je nach Ausgestaltung des Messkanals 3 zwischen den Ultraschallwandlern 11, 12, 21, 22, 31, 32 und dem Messkanal 3 Mittel angeordnet werden können, mit denen sich die Wellenfront des -jeweiligen Ultraschallsignals beeinflussen lässt, beispielsweise akustische Linsen.

Fig. 7 veranschaulicht in einer schematischen und zu Fig. 3 analogen Darstellung ein zweites Ausführungsbeispiel einer erfindungsgemässen Ultraschall-Messvorrichtung 1. Bei der folgenden Beschreibung des zweiten Ausführungsbeispiels wird nur auf die Unterschiede zu dem ersten Ausführungsbeispiel näher eingegangen. Ansonsten gelten die Erläuterungen des ersten Ausführungsbeispiels bzw. seiner Varianten in gleicher Weise oder in sinngemäss gleicher Weise auch für das zweite Ausführungsbeispiel. Bei dem zweiten Ausführungsbeispiel sind gleiche Teile oder von der Funktion her gleichwertige Teile mit den gleichen Bezugszeichen bezeichnet wie bei dem ersten Ausführungsbeispiel bzw. seinen Varianten.

Bei dem zweiten Ausführungsbeispiel sind insgesamt vier Ultraschallwandler 11, 12, 21, 22 vorgesehen, nämlich die beiden ersten Ultraschallwandler 11, 12, welche das erste Wandlerpaar bilden, mit dem in der ersten Messebene M1 gemessen wird, und die beiden zweiten Ultraschallwandler 21, 22, welche das zweite Wandlerpaar bilden, mit dem in der zweiten Messebene M2 gemessen wird. Durch das erste Wandlerpaar 11, 12 wird die erste Messrichtung 81 festgelegt, welche gemeinsam mit der Mittelachse M des Messkanals 3 die erste Messebene M1 definiert. Durch das zweite Wandlerpaar 21, 22 wird die zweite Messrichtung 82 festgelegt, welche gemeinsam mit der Mittelachse M des Messkanals 3 die zweite Messebene M2 definiert.

Bei dem zweiten Ausführungsbeispiel ist der Messkanal 3 derart ausgestaltet, dass er im geschlossenen Zustand des Gehäuses 4 einen viereckigen und vorzugsweise einen quadratischen Querschnitt senkrecht zu seiner Mittelachse M aufweist und durch vier jeweils planare Kanalflächen 35 begrenzt wird. Dabei ist der Messkanal 3 so ausgestaltet, dass er sowohl im ersten Gehäuseteil 41 als auch im zweiten Gehäuseteil 42 jeweils einen V-förmigen Querschnitt aufweist. Das heisst, die Grenzfläche zwischen dem ersten Gehäuseteil 41 und dem zweiten Gehäuseteil 42 verläuft entlang einer Flächendiagonale des viereckigen Querschnitts des Messkanals 3.

Durch diese Massnahme kann auch bei einem viereckigen Querschnitt des Messkanals 3 senkrecht zu seiner Mittelachse M ein besonders einfaches Einlegen der Leitung 100 in den Messkanal 3 im geöffneten Zustand des Gehäuses 4 gewährleistet werden, denn die jeweiligen Kanalflächen 35 münden unter einem stumpfen Winkel und nicht rechtwinklig in die Oberflächen der Einsätze 51, 52 (In Fig. 7 nicht dargestellt). Im geöffneten Zustand des Gehäuses 4 kann somit die Leitung 100 sehr einfach in den dann V-förmigen Querschnitt eingelegt werden.

Die vier Ultraschallwandler 11, 12, 21, 22 sind wiederum um den Messkanal 3 herum angeordnet. Dabei sind die beiden ersten Ultraschallwandler 11, 12 bezüglich der Mittelachse M des Messkanals 3, also in Strömungsrichtung A gesehen, versetzt zu einander angeordnet. Auch die beiden zweiten Ultraschallwandler 21, 22 sind bezüglich der Mittelachse M des Messkanals 3, also in Strömungsrichtung A gesehen, versetzt zueinander angeordnet.

Bezüglich der Umfangsrichtung des Messkanals 3 sind die vier Ultraschallwandler 11, 12, 21, 22 derart angeordnet und ausgerichtet, dass jeder Ultraschallwandler 11, 12, 21, 22 jeweils eine andere der vier Kanalflächen 35 mit Ultraschallsignalen beaufschlägt. Dabei sind jeweils die beiden ersten Ultraschallwandler 11, 12 an zueinander parallelen Kanalflächen 35 angeordnet, und die beiden zweiten Ultraschallwandler 21, 22 sind an zueinander parallelen Kanalflächen 35 angeordnet. Somit ist an jeder der vier Kanalflächen 35 jeweils einer der Ultraschallwandler 11, 12, 21, 22 vorgesehen.

Fig. 8 zeigt in einer schematischen, perspektivischen und zu Fig. 2 analogen Darstellung ein drittes Ausführungsbeispiel einer erfindungsgemässen Ultraschall-Messvorrichtung 1. Allerdings sind in Fig. 8 aus Gründen der besseren Übersicht die Kontrolleinrichtung 10 mit der Auswerteeinheit 20 und die Signalleitungen 11a, 12a, 21a, 22a, 31a, 32a nicht dargestellt.

Bei der folgenden Beschreibung des dritten Ausführungsbeispiels wird nur auf die Unterschiede zu dem ersten und zweiten Ausführungsbeispiel näher eingegangen. Ansonsten gelten die Erläuterungen des ersten und zweiten Ausführungsbeispiels bzw. ihrer Varianten in gleicher Weise oder in sinngemäss gleicher Weise auch für das dritte Ausführungsbeispiel. Bei dem dritten Ausführungsbeispiel sind gleiche Teile oder von der Funktion her gleichwertige Teile mit den gleichen Bezugszeichen bezeichnet wie bei dem ersten und dem zweiten Ausführungsbeispiel.

Bei dem dritten Ausführungsbeispiel sind wie bei dem ersten Ausführungsbeispiel insgesamt sechs Ultraschallsensoren 11, 12, 21, 22, 31, 32 vorgesehen, nämlich die beiden ersten Ultraschallsensoren 11, 12, welche das erste Wandlerpaar bilden, die beiden zweiten Ultraschallsensoren 21, 22 welche das zweite Wandlerpaar bilden, und die beiden dritten Ultraschallsensoren 31, 32, welche das dritte Wandlerpaar bilden. Ferner ist auch bei dem dritten Ausführungsbeispiel der Messkanal 3 wiederum derart ausgestaltet, dass er im geschlossenen Zustand des Gehäuses 4 senkrecht zu seiner Mittelachse M einen sechseckigen Querschnitt aufweist.

Im Unterschied zu dem ersten Ausführungsbeispiels sind bei dem dritten Ausführungsbeispiel die beiden dritten Ultraschallwandler 31, 32 so angeordnet und ausgerichtet, dass die durch sie festgelegte dritte Messstrecke 83 senkrecht zur Mittelachse M des Messkanals 3 und damit senkrecht zur Strömungsrichtung A verläuft. Die beiden dritten Ultraschallwandler 31, 32 sind so ausgerichtet, dass die Flächennormale ihrer jeweiligen Send- und Empfangsfläche senkrecht auf der Mittelachse M des Messkanals 3 steht.

Da bei dieser Anordnung die dritte Messstrecke 83 das Fluid senkrecht zu der Strömungsrichtung A durchläuft, sind die über die dritte Messstrecke 83 gesendeten bzw. empfangenen Ultraschallsignale bezüglich ihre jeweiligen Laufzeiten durch das Fluid und ihre jeweiligen Dämpfungen durch das Fluid unabhängig von der Strömungsgeschwindigkeit, mit welcher das Fluid durch die Leitung 100 strömt. Daher können anhand dieser Ultraschallsignale, welche über die dritte Messstrecke 83 gesendet und empfangen werden, die Schallausbreitungseigenschaften in dem Fluid ermittelt werden, und zwar unabhängig von der Strömungsgeschwindigkeit des Fluids in der Leitung 100.

Somit kann mit Hilfe der dritten Messstrecke 83 mindestens eine Kenngrösse des Fluids ermittelt werden, welche von der Schallgeschwindigkeit oder der Schalldämpfung in dem Fluid abhängig ist. Solche Kenngrössen sind beispielsweise die Viskosität des Fluids, das Auftreten von Luft- oder Gasblasen, die Konzentration von Komponenten in dem Fluid, beispielsweise die Methanol Konzentration, oder der Feststoffanteil in einer Suspension, oder die Zellendichte in einem biologischen Fluid.

Insbesondere können anhand dieser das Fluid senkrecht zu seiner Strömungsrichtung A durchlaufenden dritten Messstrecke 83 auch Änderungen in dem Fluid, insbesondere Änderungen in seiner Zusammensetzung, detektiert werden, beispielsweise die Zunahme oder die Abnahme der Konzentration oder der Dichte einer Komponente oder das Auftreten von Gasblasen in einer Flüssigkeit. Daher eignet sich die Ultraschall-Messvorrichtung 1 insbesondere auch für die Prozessüberwachung oder das Monitoring von strömenden Fluiden in flexiblen oder deformierbaren Leitungen 100, beispielsweise bei Prozessen in der Halbleiterindustrie, in pharmazeutischen oder biologischen Prozessen oder für die Regelung solcher Prozesse. So kann beispielsweise die Zelldichte, die Protein Konzentration, die Salzkonzentration, die Nährlösungskonzentration, die Zuckerkonzentration oder die Methanol Konzentration in einem Prozess überwacht und geregelt werden. Wird mittels der Ultraschall-Messvorrichtung 1 eine Änderung in einer Kenngrösse detektiert, so können durch einen entsprechend ausgestalteten Regelkreis Korrekturmassnahmen eingeleitet werden, um die Kenngrösse wieder auf ihren Sollwert zu führen.

Wenn die dritten Ultraschallwandler 31, 32 also derart ausgerichtet und angeordnet sind, dass die dritte Messstrecke 83 senkrecht zur Strömungsrichtung A verläuft, so kann zusätzlich zu dem Durchfluss durch die Leitung 100 auch noch eine von der Strömungsgeschwindigkeit des Fluids in der Leitung 100 unabhängige Kenngrösse des Fluids ermittelt werden. Dazu können die über die dritte Messstrecke 83 gesendeten bzw. empfangenen Ultraschallsignale bezüglich ihrer Laufzeit, oder bezüglich ihrer Dämpfung, oder bezüglich ihrer Laufzeit und ihrer Dämpfung analysiert werden.

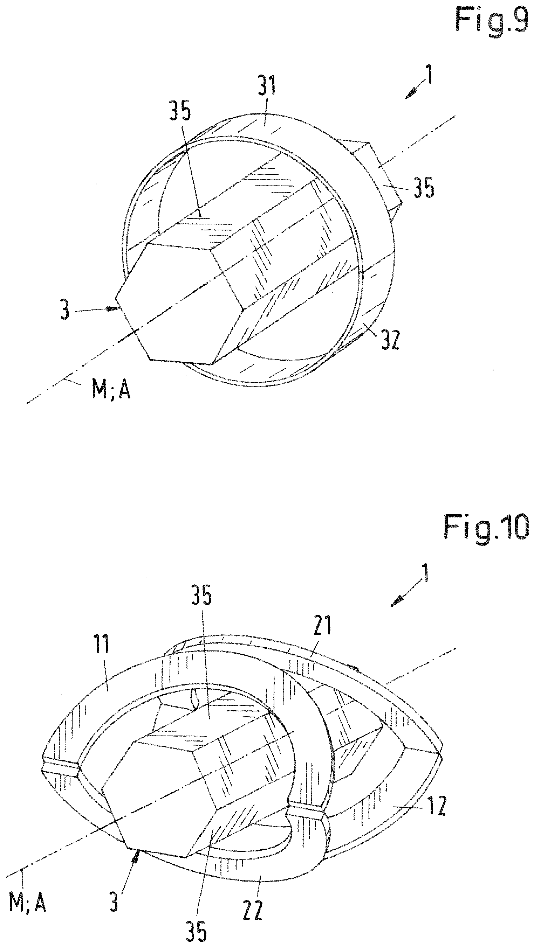

Fig. 9 zeigt eine Variante für die Ausgestaltung des dritten Wandlerpaares mit den beiden dritten Ultraschallwandlern 31, 32, welche die dritte Messstrecke 83 festlegen, die senkrecht auf der Mittelachse M des Messkanals 3 und somit senkrecht auf der Strömungsrichtung A des Fluids steht. Das erste und das zweite Wandlerpaar sind in Fig. 9 aus Gründen der besseren Übersicht nicht dargestellt. Bei dieser Variante sind die beiden dritten Ultraschallwandler 31, 32 jeweils mit einer gekrümmten Sende- und Empfangsfläche ausgestaltet. Jeder der beiden dritten Ultraschallwandler 31, 32 weist eine Sende- und Empfangsfläche auf, die halbringförmig ausgestaltet ist, sodass sich die beiden dritten Ultraschallwandler 31, 32 zu einem Ring ergänzen, welcher den Messkanal 3 konzentrisch bzw. koaxial umschliesst. Bei dieser Ausgestaltung ist die jeweils gekrümmte Sende- und Empfangsfläche der beiden dritten Ultraschallwandler 31, 32 vorzugsweise aus einer Folie hergestellt, beispielsweise aus einer PVDF-Folie.

In Fig. 10 ist eine Variante für die Ausgestaltung des ersten und des zweiten Wandlerpaares gezeigt, die für alle beschriebenen Ausführungsbeispiele und Varianten verwendet werden kann. Gemäss dieser Variante sind die beiden ersten Ultraschallwandler 11, 12 und die beiden zweiten Ultraschallwandler 21, 22 jeweils mit einer gekrümmten Send- und Empfangsfläche ausgestaltet. Jeder erste Ultraschallwandler 11, 12 und jeder zweite Ultraschallwandler 21, 22 ist jeweils in Form eines halben Rings ausgestaltet. Jeder dieser halben Ringe ist dabei so angeordnet, dass die Achse des jeweiligen Rings schräg zur Mittelachse M des Messkanals 3 und damit schräg zur Strömungsrichtung A des Fluids verläuft. Das heisst, jeder der halben Ringe, die einen der ersten Ultraschallwandler 11, 12 oder der zweiten Ultraschallwandler 21, 22 bilden, ist gegen die Mittelachse M des Messkanals 3 geneigt, und zwar derart, dass die halbringförmigen Sende- und Empfangsflächen der beiden ersten Ultraschallwandler 11, 12 parallel zueinander sind, und dass die beiden halbringförmigen Sende- und Empfangsflächen der zweiten Ultraschallwandler 21, 22 parallel zueinander sind. Von jedem Wandlerpaar ist jeweils der eine der beiden Ultraschallwandler 11, 21 in dem ersten Gehäuseteil 41 angeordnet, und der andere der beiden Ultraschallwandler 12, 22 in dem zweiten Gehäuseteil 42. Es versteht sich, dass auch bei der in Fig. 10 dargestellten Variante natürlich auch noch ein drittes Wandlerpaar vorgesehen sein kann, beispielsweise ein solches, wie es in Fig. 8 oder in Fig. 9 dargestellt ist.

Auch bei der in Fig. 10 dargestellten Variante sind die halbringförmigen Sende- und Empfangsflächen der Ultraschallwandler 11, 21, 21, 22 vorzugsweise aus einer Folie hergestellt, beispielsweise aus einer PVDF Folie.

Eine weitere Variante besteht darin, die halben Ringe, welche in Fig. 10 die Ultraschallwandler 11, 12, 21, 22 bilden, segmentiert auszugestalten, Beispielsweise kann jeweils nur ein Segment des jeweiligen halben Rings als Send- und Empfangsfläche zum Aussenden und Empfangen von Ultraschallsignalen ausgestaltet sein. Es ist aber auch möglich, dass auf jedem der halben Ringe jeweils mehrere separate Sende- und Empfangsflächen zum jeweiligen Aussenden und Empfangen von Ultraschallsignalen vorgesehen sind, wobei jede separate Sende- und Empfangsfläche als ein Segment auf dem jeweiligen halben Ring ausgestaltet ist. Dabei können auch Sende- und Empfangsflächen vorgesehen und derart angeordnet sein, dass die von ihnen ausgesandten Ultraschallsignale den Messkanal 3 nicht beaufschlagen, sondern neben dem Messkanal 3 durch das Gehäuse 4 laufen. Derartige Signale sind beispielsweise zum Eichen oder zum Kalibrieren der Ultraschall-Messvorrichtung 1 geeignet.

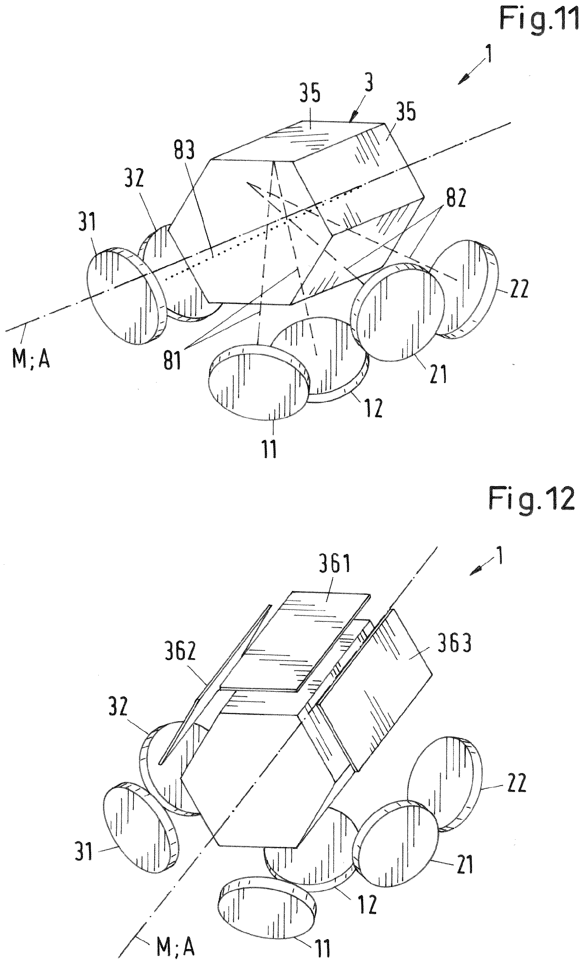

Fig. 11 zeigt in einer schematische Darstellung ein viertes Ausführungsbeispiel einer erfindungsgemässen Ultraschall-Messvorrichtung 1 in einer perspektivischen, zu Fig. 2 analogen Darstellung. Allerdings sind in Fig. 11 aus Gründen der besseren Übersicht die Kontrolleinrichtung 10 mit der Auswerteeinheit 20 und die Signalleitungen 11a, 12a, 21a, 22a, 31a, 32a nicht dargestellt.

Bei der folgenden Beschreibung des vierten Ausführungsbeispiels wird nur auf die Unterschiede zu den anderen Ausführungsbeispielen näher eingegangen. Ansonsten gelten die Erläuterungen bezüglich der ersten drei Ausführungsbeispiele bzw. ihrer Varianten in gleicher Weise oder in sinngemäss gleicher Weise auch für das vierte Ausführungsbeispiel. Bei dem vierten Ausführungsbeispiel sind gleiche Teile oder von der Funktion her gleichwertige Teile mit den gleichen Bezugszeichen bezeichnet wie bei den ersten drei Ausführungsbeispielen.

Bei dem vierten Ausführungsbeispiel sind wie bei dem ersten Ausführungsbeispiel insgesamt sechs Ultraschallwandler 11, 12, 21, 22, 31, 32 vorgesehen, nämlich die beiden ersten Ultraschallwandler 11, 12, welche das erste Wandlerpaar bilden und die erste Messstrecke 81 festlegen, die beiden zweiten Ultraschallwandler 21, 22 welche das zweite Wandlerpaar bilden und die zweite Messstrecke 82 festlegen, und die beiden dritten Ultraschallsensoren 31, 32, welche das dritte Wandlerpaar bilden und die dritte Messstrecke 83 festlegen. Ferner ist auch bei dem vierten Ausführungsbeispiel der Messkanal 3 wiederum derart ausgestaltet, dass er im geschlossenen Zustand des Gehäuses 4 senkrecht zu seiner Mittelachse M einen sechseckigen Querschnitt aufweist. Die drei Messebenen M1, M2, M3 sind in sinngemäss gleicher Weise wie bei den anderen Ausführungsbeispielen wiederum durch die drei Messstrecken 81, 82, 83 sowie die Mittelachse M des Messkanals 3 definiert.

Im Unterschied zu dem ersten Ausführungsbeispiel sind bei dem vierten Ausführungsbeispiel alle Ultraschallwandler 11, 12, 21, 22, 31, 32 in einem der beiden Gehäuseteile 41, 42 angeordnet, hier in dem in Fig. 11 nicht näher dargestellten unteren Gehäuseteil, welches das zweite Gehäuseteil 42 ist. Natürlich sind auch solche Ausgestaltungen möglich, bei denen alle Ultraschallwandler in dem ersten Gehäuseteil 41 angeordnet sind.

Die beiden Ultraschallwandler 11,12, oder 21, 22 oder 31, 32, die jeweils ein Wandlerpaar bilden, tauschen dann jeweils Ultraschallsignale über eine Reflexion miteinander aus. Beispielsweise sendet einer der ersten Ultraschallwandler 11 oder 12 ein Ultraschallsignal entlang der ersten Messtrecke 81 schräg zur Strömungsrichtung A auf eine der Kanalflächen 35 aus. Das Ultraschallsignal durchläuft den Messkanal 3 schräg zur Strömungsrichtung A, beispielsweise schräg in Strömungsrichtung A, wird an der gegenüberliegenden Kanalfläche 35 reflektiert und gelangt dann zu dem anderen der beiden ersten Ultraschallwandler 12 oder 11. Dieser kann ebenfalls ein Ultraschallsignal aussenden, welches dann schräg gegen die Strömungsrichtung A läuft, an der gegenüberliegenden Kanalfläche 35 reflektiert wird, und dann von dem erstgenannten der beiden ersten Ultraschallwandler 11 oder 12 empfangen wird.

In sinngemäss gleicher Weise tauschen auch die beiden zweiten Ultraschallwandler 21, 22 des zweiten Wandlerpaares sowie die beiden dritten Ultraschallwandler 31, 32 des dritten Wandlerpaares jeweils Ultraschallsignale über die entsprechende zweite Messstrecke 82 bzw. dritte Messstrecke 83 miteinander aus. Wie dies Fig. 11 zeigt, sind die sechs Ultraschallwandler 11, 12, 21, 22, 31, 32 so angeordnet und ausgerichtet, dass alle drei Messstrecken 81, 82, 83 schräg, das heisst insbesondere nicht rechtwinklig, zur Mittelachse M des Messkanals 3 und somit zur Strömungsrichtung A verlaufen. Dabei sind jeweils die beiden Ultraschallwandler 11, 12 oder 21, 22 oder 31,32, die zu dem gleichen Wandlerpaar gehören, an der gleichen Kanalfläche 35 angeordnet. Das heisst, dass beispielsweise die beiden ersten Ultraschallwandler 11, 12 so angeordnet sind, dass sie die gleiche Kanalfläche 35 mit Ultraschallsignalen beaufschlagen können. Gleiches gilt für die beiden zweiten Wandler 21, 22 sowie für die beiden dritten Wandler 31, 32. Dabei ist es bevorzugt - wie in Fig. 11 dargestellt - dass die Ultraschallwandler 11, 12, 21, 22, 31, 33 derart angeordnet und ausgerichtet sind, dass jedes Wandlerpaar jeweils eine andere Kanalfläche 35 mit Ultraschallsignalen beaufschlagt.

Selbstverständlich sind auch bei dem vierten Ausführungsbeispiel Varianten möglich, bei welchen die Ultraschallwandler 31, 32 des dritten Wandlerpaares so angeordnet und ausgerichtet sind, dass die dritte Messstrecke 83 senkrecht auf der Mittelachse M des Messkanals 3 und damit senkrecht auf der Strömungsrichtung A steht. Über diese dritte Messstrecke 83 kann dann wiederum eine Kenngrösse des Fluids ermittelt werden, die unabhängig von der Strömungsgeschwindigkeit des Fluids in der Leitung 100 ist. Auch ist es möglich, über die dritte Messstrecke 83, die senkrecht auf der Mittelachse M des Kanals 3 steht, eine Leitungsgrösse zu messen, womit eine Grösse gemeint ist, welche Eigenschaften der im jeweiligen Anwendungsfall verwendeten Leitung 100 beschreibt, beispielsweise die Dicke der Wandung 101 oder das Material, aus welchem die Leitung 100 besteht.

Die zur Mittelachse M senkrechte Anordnung der dritten Messstrecke 83 kann beispielsweise in sinngemäss gleicher Weise realisiert werden wie dies im Zusammenhang mit Fig. 8 oder mit Fig. 9 erläutert wurde. Dabei ist es möglich, dass einer der beiden dritten Ultraschallwandler 31 oder 32 im ersten Gehäuseteil 41 angeordnet wird, und der andere der beiden dritten Ultraschallwandler 32 oder 31 im zweiten Gehäuseteil 42, sodass die Mittelachse M zwischen den beiden dritten Ultraschallwandlern 31 oder 32 verläuft.

Gemäss einer anderen Variante ist es auch möglich, nur einen dritten Ultraschallwandler 31 oder 32 vorzusehen, der entweder im ersten Gehäuseteil 41 oder im zweiten Gehäuseteil 42 angeordnet ist. Dabei ist dieser dritte Ultraschallwandler 31 oder 32 so ausgerichtet, dass er den Messkanal 3 senkrecht zu seiner Mittelachse M mit Ultraschallsignalen beaufschlagt, sodass die dritte Messstrecke 83, welche durch den dritten Ultraschallwandler 31 oder 32 festgelegt ist, senkrecht auf der Strömungsrichtung A des Fluids steht. Bei dieser Variante weist die Ultraschall-Messvorrichtung 1 dann nur fünf Ultraschallsensoren auf, nämlich die beiden ersten Ultraschallwandler 11, 12, die beiden zweiten Ultraschallwandler 21, 22, sowie nur einen der beiden dritten Ultraschallwandler 31 oder 32.

Bei dieser Variante sendet der einzige dritte Ultraschallwandler 31 oder 32 ein Ultraschallsignal senkrecht zur Strömungsrichtung A aus. Dieses Signal wird dann nach Durchlaufen des Messkanals 3 zumindest teilweise an der gegenüberliegenden Kanalfläche 35 reflektiert, und das daraus resultierende Echosignal wird dann von dem einzigen dritten Wandler 31 oder 32 empfangen, der das Ultraschallsignal ausgesendet hat.

Fig. 12 zeigt in einer zu Fig. 11 analogen Darstellung eine Variante für das vierte Ausführungsbeispiel. Bei dieser Variante sind an denjenigen Kanalflächen 35, welche den von den Wandlerpaaren beaufschlagten Kanalflächen 35 gegenüberliegen, Reflektoren 361, 362, 363 vorgesehen, um die von den Ultraschallwandlern 11, 12, 21, 22, 31, 32 ausgesendeten Ultraschallsignale zu reflektieren. Es sind insgesamt drei Reflektoren 361, 362, 363 vorgesehen, nämlich ein erster Reflektor 361, welcher dem ersten Wandlerpaar gegenüberliegend angeordnet ist, ein zweiter Reflektor 362, welcher dem zweiten Wandlerpaar gegenüberliegend angeordnet ist, und ein dritter Reflektor 363, welcher dem dritten Wandlerpaar gegenüberliegend angeordnet ist. Das heisst, der erste Reflektor 361 ist an derjenigen Kanalfläche 35 angeordnet, die der von den ersten Ultraschallwandlern 11, 12 beaufschlagten Kanalfläche 35 gegenüberliegt, der zweite Reflektor 362 ist an derjenigen Kanalfläche 35 angeordnet, die der von den zweiten Ultraschallwandlern 21, 22 beaufschlagten Kanalfläche 35 gegenüberliegt, und der dritte Reflektor 363 ist an derjenigen Kanalfläche 35 angeordnet ist, die der von den dritten Ultraschallwandlern 31, 32 beaufschlagten Kanalfläche 35 gegenüberliegt. Die Reflektoren 361, 362, 363 sind ausserhalb des Messkanals 3 angeordnet. Jeder Reflektor 361, 362, 363 ist als planare, also ungekrümmte, plattenförmige Struktur ausgestaltet, die parallel zu der jeweiligen Kanalfläche 35 angeordnet ist.

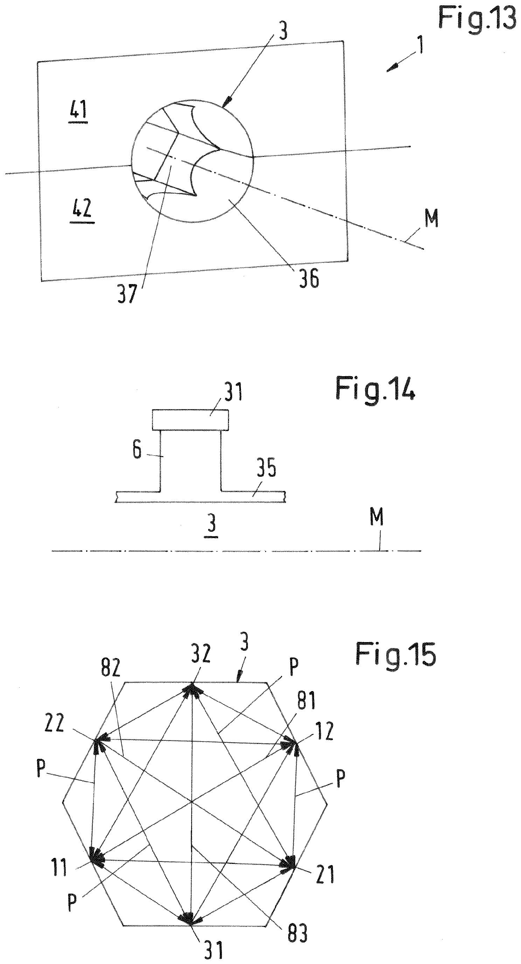

In Fig. 13 ist in einer schematischen Darstellung eine besonders bevorzugte Ausgestaltung des Messkanals 3 veranschaulicht, welche für alle Ausführungsbeispiele sowie ihre Varianten bevorzugt ist, bei denen der Messkanal 3 im geschlossenen Zustand des Gehäuses 4 senkrecht zu seiner Mittelachse M einen n-eckigen Querschnitt aufweist. Bei dieser Ausgestaltung hat der Messkanal 3 den Eingangsbereich 36 (siehe auch Fig. 1), den Mittelbereich 37 und den Ausgangsbereich 38, die in Strömungsrichtung A gesehen hintereinander angeordnet sind. Der Ausgangsbereich 38 ist in Fig. 13 nicht zu sehen, er ist jedoch sinngemäss gleich ausgestaltet wie der Eingangsbereich 36. Der Eingangsbereich 36 und der Ausgangsbereich 38 sind die beiden Endbereiche des Messkanals 3, die bezüglich der Strömungsrichtung A an den beiden Enden des Gehäuses 4 angeordnet sind, und der Mittelbereich 37 ist der dazwischenliegende Bereich, welcher das Messvolumen begrenzt, das mit den Ultraschallsignalen beaufschlagt wird. Gemäss der in Fig. 13 veranschaulichten bevorzugten Ausgestaltung haben der Eingangsbereich 36 sowie der Ausgangsbereich 38 im geschlossenen Zustand des Gehäuses 4 jeweils einen kreisförmigen Querschnitt senkrecht zur Mittelachse M des Messkanals 3, und der Mittelbereich 37 hat den n-eckigen, hier sechseckigen Querschnitt senkrecht zur Mittelachse M. Dabei ist der Messkanal 3 so ausgestaltet, dass der n-eckige Querschnitt des Mittelbereichs 37 kontinuierlich und sanft in den runden Querschnitt sowohl des Eingangsbereichs 36 als auch des Ausgangsbereich 38 übergeht. Durch diesen umlaufenden, sanften Übergang von dem runden Profil (beispielsweise der Leitung 100 ausserhalb des Gehäuses) auf das n-eckige Profil des Messkanals 3 werden abrupte Querschnittsänderungen vermieden. Dadurch werden alle Strömungsvektoren in der Leitung 100 auf geordneten Bahnen in den Messkanal 3 hineingeführt und auf geordneten Bahnen aus dem Messkanal 3 herausgeführt. Durch diese Massnahme lassen sich Turbulenzen oder andere ungünstige Strömungsverhältnisse im Messkanal 3 zumindest deutlich reduzieren, wenn nicht ganz vermeiden.

In Fig. 14 ist in einer schematischen Darstellung eine bevorzugte Anordnung der Ultraschallwandler 11, 12, 21, 22, 31, 32 am Beispiel des dritten Ultraschallwandlers 31 dargestellt. Diese Anordnung ist insbesondere für alle Ausführungsbeispiele sowie ihre Varianten bevorzugt, bei denen die Ultraschallsensoren 11, 12, 21, 22, 31, 32 planare Sende- und Empfangsflächen haben. Wie bereits erwähnt, sind alle Ultraschallwandler 11, 12, 21, 22, 31, 32 vorzugsweise im Inneren des Gehäuses 4 an oder in den beiden Einsätzen 51, 52 angeordnet, die in dem ersten Gehäuseteil 41 bzw. in dem zweiten Gehäuseteil 42 vorgesehen sind. Dabei ist es bevorzugt, wie in Fig. 14 am Beispiel des dritten Ultraschallwandlers 31 dargestellt, wenn die Ultraschallwandler 11, 12, 21, 22, 31, 32 nicht direkt am Messkanal 3 bzw. auf der Kanalfläche 35 platziert sind, sondern auf einem Sockel 6, sodass der jeweilige Ultraschallwandler, hier 31, beabstandet vom Messkanal 3 ist. Der Sockel 6 hat den Vorteil, die Einkopplung von störenden Ultraschallwellen zu unterbinden, die quer zur gewünschten Messstrecke 81, 82, 83 bzw. quer zur Hauptausbreitungsrichtung abgegeben werden. Derartige störende Ultraschallwellen könnten im gesamten Gehäuse 4 umher vagabundieren und beispielsweise mit den Messsignalen interferieren, wodurch diese Messsignale verfälscht oder geändert werden. Durch den Sockel 6 lassen sich solche Störsignale zumindest reduzieren.

Fig. 14 zeigt den Fall, bei welchem der dritte Ultraschallwandler 31 für eine dritte Messtrecke 83 ausgerichtet ist, welche senkrecht auf der Mittelachse M des Messkanals 3 steht. Es versteht sich natürlich, dass der jeweilige Ultraschallwandler für schräg zur Strömungsrichtung A verlaufende Messstrecken 81, 82, 83 schräg am Sockel 6 angebracht ist.

Durch die Hauptausbreitungsrichtung des jeweiligen Ultraschallwandlers 11, 12, 21, 22, 31, 32 werden die Messstrecken 81, 82, 83 festgelegt, entlang derer jeweils die beiden Ultraschallwandler eines Wandlerpaares 11, 12 bzw. 21, 22 bzw. 31, 32 Ultraschallsignale miteinander austauchen. Neben diesen Messtrecken 81, 82, 83 lassen sich aber auch andere Messpfade P (Fig. 15) ausnutzen, um Ultraschallsignale zu empfangen und für die Auswertung heranzuziehen. Das von dem jeweiligen Ultraschallwandler 11, 12, 21, 22, 31, 32 ausgesendete Ultraschallsignal, das ja eine Druckwelle darstellt, breitet sich nicht nur in der Hauptausbreitungsrichtung aus, sondern es existieren auch Signalanteile, die sich in anderen Richtungen ausbreiten. So ist beispielsweise das Hauptmaximum des Ultraschallsignals üblicherweise keulenförmig, breitet sich also nicht nur exakt senkrecht zur Sende- und Empfangsfläche des Ultraschallwandlers 11, 12, 21, 22, 31, 32 aus. Zudem können diese Signalanteile, die sich in anderen Richtungen als der Hauptausbreitungsrichtung ausbreiten, beispielsweise Neben- oder Seitenmaxima (häufig auch als Neben- oder Seitenkeulen bezeichnet) des von dem jeweiligen Ultraschallwandlers 11, 12, 21, 22, 31, 32 ausgesendeten Ultraschallsignals sein. Auch diese Signalanteile, die sich nicht entlang der Messstrecken 81, 82, 83 ausbreiten, können für die Auswertung der Messung herangezogen werden.

Diese zusätzlichen Messpfade P sind in Fig. 15 in einer schematischen Darstellung für eine Ausführungsform veranschaulicht, bei welcher insgesamt sechs Ultraschallwandler 11, 12, 21, 22, 31, 32 vorgesehen sind , welche um den Messkanal 3 herum angeordnet sind, der senkrecht zu seiner Mittelachse M einen sechseckigen Querschnitt aufweist. Mit den Bezugszeichen 81, 82, 83 sind wiederum die drei Messstrecken bezeichnet, welche durch die Hauptausbreitungsrichtungen des von dem jeweiligen Ultraschallwandler 11, 21, 21, 22, 31, 31 ausgesendeten Ultraschallsignals festgelegt sind. Die übrigen Verbindungslinien stellen Messpfade P im vorangehend beschriebenen Sinne dar. Die Gesamtanzahl der Messstrecken 81, 82, 83 und Messpfade P ist bei n Ultraschallwandlern 11, 21, 21, 22, 31, 32 durch die Hälfte des Produkts aus n und (n-1) gegeben, also durch 0.5xnx(n-1). Für den Fall, dass n gleich sechs ist, ergeben sich also insgesamt fünfzehn Messstrecken 81, 82, 83 und Messpfade P, also drei Messstrecken 81, 82, 83 und zwölf Messpfade P.

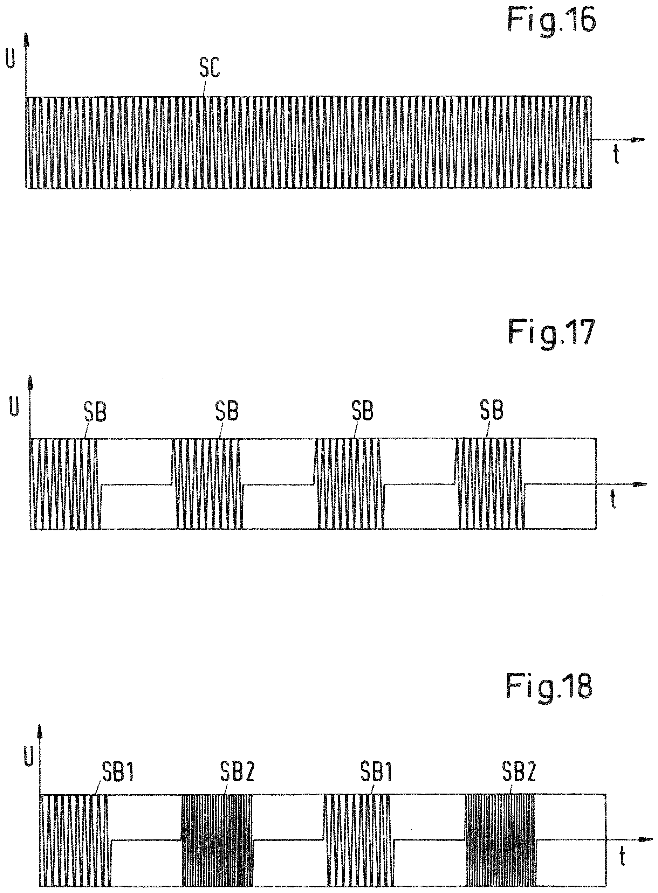

Hinsichtlich der Ultraschallsignale die von den jeweiligen Ultraschallwandlern 11, 12, 21, 22, 31, 32 ausgesendet werden, gibt es zahlreiche Möglichkeiten, von denen im Folgenden einige unter Bezugnahme auf die Fig. 16 - Fig. 21 erwähnt werden sollen. Dabei wird der Einfachheit halber und weil es für das Verständnis ausreichend ist, auf eine Ausführungsform Bezug genommen, bei welcher mit zwei Messstrecken, nämlich mit der ersten Messstrecke 81 und mit der zweiten Messstrecke 82 gemessen wird und mit vier Ultraschallwandlern, nämlich den beiden ersten Ultraschallwandlern 11, 12, welche das erste Wandlerpaar bilden, und den beiden zweiten Ultraschallwandlern 21, 22, welche das zweite Wandlerpaar bilden. Eine sinngemässe Erweiterung auf drei oder mehr Messtrecken stellt für den Fachmann kein Problem dar.

In Fig. 16 bis Fig. 21 ist jeweils auf der horizontalen Achse die Zeit t aufgetragen und auf der vertikalen Achse die Amplitude U des Ultraschallsignals, welches von den Ultraschalwandlern 11, 12, 21, 22 ausgesendet wird. Zur Aussendung des jeweiligen Ultraschallsignals werden die Ultraschallwandler 11, 12, 21, 22 von der Kontrolleinrichtung 10 über die jeweilige Signalleitung 11a, 12a, 21a, 22a angesteuert.

Bei dem in Fig. 16 dargestellten Ultraschallsignal sendet der jeweilige Ultraschallwandler 11, 12, 21, 22 ein kontinuierliches Signal SC aus (CW: continuous wave) aus. Mit dem Begriff "kontinuierliches" Ultraschallsignal ist ein solches Ultraschallsignal gemeint, bei welchem die Amplitude des Signals über einen Zeitraum im Wesentlichen konstant ist, welcher deutlich grösser ist als die Einschwingzeit oder die Abklingzeit des Signals, also der transiente Anteil des Signals. Die Amplitude des Signals wird als "im Wesentlichen" konstant über einen Zeitraum bezeichnet, wenn die Änderung der Amplitude des Signals in diesem Zeitraum höchstens 7%, insbesondere höchstens 5%, bevorzugt höchstens 3% und besonders bevorzugt höchstens 1% beträgt.

Alternativ ist es auch möglich, dass der jeweilige Ultraschallwandler 11, 12, 21, 22 für jeweils eine Messung ein Impulspaket SB (Burst) aussendet. In Fig. 17 sind solche Ultraschallsignale dargestellt, wobei jedes Impulspaket SB zu jeweils einer Messung gehört.

Eine weitere Möglichkeit ist in Fig. 18 gezeigt. Auch hier wird für jede Messung jeweils ein Impulspaket SB1 bzw. SB2 ausgesendet, wobei jedoch für die beiden Messstrecken 81, 82 unterschiedliche Frequenzen verwendet werden. Das Impulspaket SB1, das für die erste Messstrecke 81 verwendet wird, hat eine niedrigere Frequenz als das Impulspaket SB2, das für die zweite Messstrecke 82 verwendet wird.

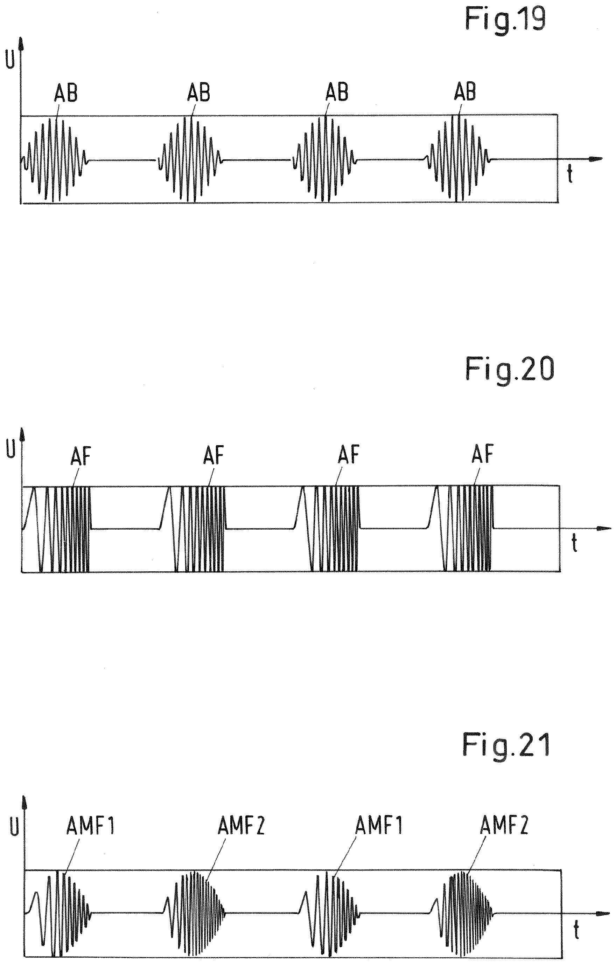

Bei der in Fig. 19 veranschaulichten Variante sendet der jeweilige Ultraschallwandler 11, 12, 21, 22 wiederum für jede Messung ein Impulspaket AB (Burst) aus, jedoch ist das Impulspaket AB amplitudenmoduliert, das heisst die Amplitude des Signals in dem jeweiligen Impulspaket AB ändert sich mit der Zeit t.

Bei der in Fig. 20 veranschaulichten Variante sendet der jeweilige Ultraschallwandler 11, 12, 21, 22 wiederum für jede Messung ein Impulspaket AF (Burst) aus, jedoch ist das Impulspaket frequenzmoduliert, das heisst die Frequenz des Signals in dem jeweiligen Impulspaket AF ändert sich mit der Zeit t. Ein solches Impulspaket AF wird auch als Chirp Burst bezeichnet.

Natürlich ist es auch möglich die Frequenzmodulation und die Amplitudenmodulation miteinander zu kombinieren.

Bei der in Fig. 21 veranschaulichten Variante sendet der jeweilige Ultraschallwandler 11, 12, 21, 22 wiederum für jede Messung ein Impulspaket AMF1, AMF2 aus, jedoch ist das jeweilige Impulspaket sowohl amplitudenmoduliert als auch frequenzmoduliert, das heisst sowohl die Frequenz des Signals als auch die Amplitude in dem jeweiligen Impulspaket AMF1, AMF2 ändert sich mit der Zeit t. Ein solches Impulspaket AMF1 bzw. AMF2 wird auch als amplitudenmodulierter Chirp Burst bezeichnet. Ähnlich wie bei der in Fig. 18 dargestellten Variante ist es auch bei der in Fig. 21 dargestellten Variante möglich, für die beiden Messstrecken 81, 82 unterschiedliche Frequenzen zu verwenden. Auch ist es möglich, für die beiden Messtrecken 81, 82 unterschiedliche Amplituden und/oder unterschiedliche Frequenzmodulationen und/oder unterschiedliche Amplitudenmodulationen zu verwenden. In Fig. 21 sind die für die erste Messstrecke 81 verwendeten Ultraschallsignale mit AMF1 bezeichnet und die für die zweite Messstrecke 82 verwendeten Ultraschallsignale mit AMF2.

Es versteht sich, dass die erfindungsgemässe Ultraschall-Messvorrichtung 1 auch noch weitere Sensoren oder Messeinrichtungen umfassen kann, mit denen Eigenschaften des durch die Leitung 100 strömenden Fluids erfasst oder bestimmt werden können.

So kann die erfindungsgemässe Ultraschall-Messvorrichtung 1 beispielsweise einen Temperatursensor zum Bestimmen der Temperatur des Fluids in der Leitung 100 umfassen. Dabei kann der Temperatursensor beispielsweise als kontaktloser Sensor ausgestaltet sein, mit welchem die Temperatur des Fluids ermittelt werden kann, ohne dass der Temperatursensor in Wärmekontakt mit der Leitung 100 oder dem darin strömenden Fluid ist. Dazu kann der Temperatursensor beispielsweise als Infrarotsensor ausgestaltet sein. Natürlich können auch Temperatursensoren vorgesehen sein, welche die Temperatur über einen körperlichen Kontakt ermitteln. Dann ist der Temperatursensor vorzugsweise so angeordnet, dass er im geschlossenen Zustand des Gehäuses 4 in gutem Wärmekontakt mit der Leitung 100 ist, und besonders bevorzugt so, dass der Temperatursensor in körperlichem Kontakt mit dem Bereich der Leitung 100 ist, der in den Messkanal 3 eingelegt ist.

Mit denjenigen Ausführungsformen der erfindungsgemässen Ultraschall-Messvorrichtung 1, bei denen mindestens eine Messstrecke vorgesehen ist, welche senkrecht auf der Strömungsrichtung A des Fluids in der Leitung 100 steht, lassen sich zusätzlich Kenngrössen des Fluids ermitteln, welche von der Schallgeschwindigkeit oder der Schalldämpfung in dem Fluid abhängig sind, nicht aber von der Strömungsgeschwindigkeit des Fluids in der Leitung 100.

Im Speziellen ist eine solche Ultraschall-Messvorrichtung 1 für die Messung an Fluiden geeignet, welche in pharmazeutischen oder biotechnologischen Prozessen verwendet werden, beispielsweise Zellsuspensionen, proteinhaltige Fluide oder Fluide mit organischen Komponenten. Es können auch Fluide sein, die üblicherweise in der Halbleiterindustrie verwendet werden, beispielsweise die als Slurry bezeichneten Suspensionen von Siliziumdioxid in Wasser oder ähnliches. Auch ist die erfindungsgemässe Ultraschall-Messvorrichtung 1 für Fluide geeignet, die chemisch aggressive oder hoch aggressive Substanzen sind oder umfassen, beispielsweise Alkohole, Säuren, oder Laugen, wie Ethanol, Isopropanol, Aceton, Schwefelsäure, Salzsäure, Salpetersäure, oder Ammoniakwasser. Die Ultraschall-Messvorrichtung 1 ist für Fluide über den gesamten pH-Wert Bereich von 0 bis 14 geeignet und mindestens für den Temperaturbereich von -40°C bis +95°C. Dafür geeignete Materialien für die Ultraschall-Messvorrichtung 1 sind beispielsweise Polypropylen (PP) oder Polyphenylensulfid (PPS) oder beschichtete Materialien.

Die erfindungsgemässen Ultraschall-Messvorrichtung 1 eignet sich insbesondere auch für die Überwachung, das Monitoring und die Kontrolle von Prozessen, beispielsweise in der Biotechnologie, in der pharmazeutischen Industrie oder in der Halbleiterindustrie, bei denen ein Fluid durch eine vorzugsweise flexible oder deformierbare Leitung 100 strömt. Je nach Ausgestaltung können dann auch Änderungen in Kenngrössen und damit in den Eigenschaften des Fluids, beispielsweise Konzentrationsänderungen oder sonstige Änderungen in der Zusammensetzung des Fluids, zuverlässig detektiert werden.

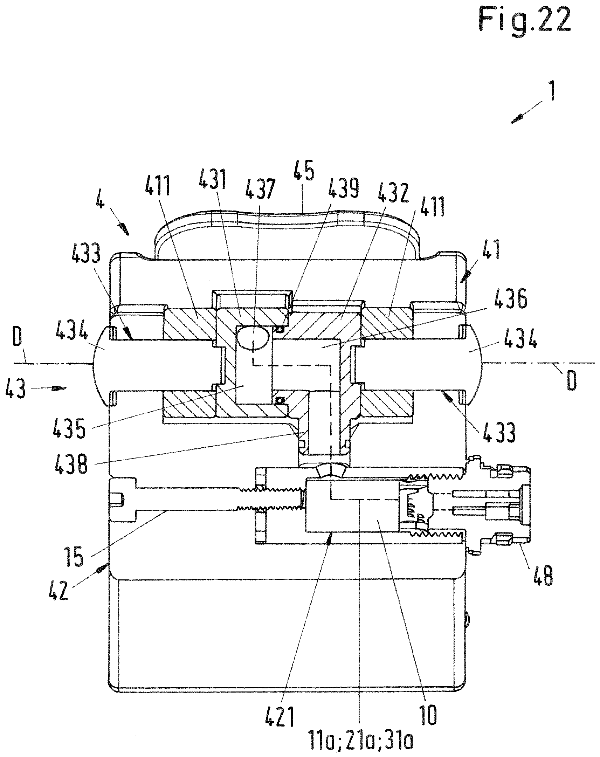

Im Hinblick auf eine möglichst kompakte Ausgestaltung ist es bevorzugt, dass die Kontrolleinrichtung 10, mit welcher die Ultraschallwandler 11, 12, 21, 22, 31, 32 angesteuert werden und welche die Messsignale von den Ultraschallwandlern 11, 12, 21, 22, 31, 32 empfängt, im Gehäuse 4 der Ultraschall-Messvorrichtung 1 angeordnet bzw. in das Gehäuse 4 integriert ist. Eine solche Ausgestaltung ist in Fig. 22 dargestellt. Die Kontrolleinrichtung 10, die optional die Auswerteeinheit 20 umfasst, ist in dem zweiten Gehäuseteil 42 angeordnet und mit dem Anschluss 48 signalverbunden. Der Anschluss 48 ist in das zweite Gehäuseteil 42 eingeschraubt. Über den Anschluss 48 wird die Ultraschall-Messvorrichtung 1 mit Energie versorgt. Ferner können über den Anschluss 48 Messsignale und/oder andere Daten zwischen der Kontrolleinrichtung 10 und einer externen Schnittstelle (nicht dargestellt) oder einer anderen externen Vorrichtung (nicht dargestellt) ausgetauscht werden.

Ein weiterer Aspekt der Erfindung, der insbesondere solche Ausführungsformen betrifft, bei welchen sowohl im ersten Gehäuseteil 41 als auch im zweiten Gehäuseteil 42 Ultraschallwandler 11, 21, 31 bzw. 12, 22, 23 angeordnet sind (siehe beispielsweise Fig. 2 und Fig. 3), ist die Signalverbindung zwischen der im zweiten Gehäuseteil 42 angeordneten Kontrolleinrichtung 10 und den im ersten Gehäuseteil 41 angeordneten Ultraschallwandlern 11, 21, 31. Da die beiden Gehäuseteile 41 und 42 relativ zueinander drehbar bzw. schwenkbar angeordnet sind, ergibt sich das Problem, wie eine sichere und zuverlässige Signalverbindung zwischen den Ultraschallwandlern 11, 21, 31 und der Kontrolleinrichtung 10 realisiert werden kann.

Gemäss einem Aspekt der Erfindung wird für diese Signalverbindung das Gelenk 43 genutzt, wie im Folgenden anhand der Fig. 22 erläutert wird. Fig. 22 zeigt eine Ausführungsform der gelenkigen Verbindung der beiden Gehäuseteile 41 und 42 in einem Schnitt durch eine Drehachse D des Gelenks 43. Im Folgenden wird ohne Beschränkung der Allgemeinheit angenommen, dass die Ultraschallwandler 11, 21, 31 im ersten Gehäuseteil 41 angeordnet sind und die Ultraschallwandler 12, 22, 32 im zweiten Gehäuseteil 42. In der Darstellung der Fig. 22 sind die Ultraschallwandler 11, 12, 21, 22, 31, 32 nicht zu sehen.

Da die Ultraschallwandler 12, 22, 32 im gleichen Gehäuseteil 42 angeordnet sind wie die Kontrolleinrichtung 10, ist deren Signalverbindung mit der Kontrolleinrichtung 10 unproblematisch und bedarf daher keiner weiteren Erläuterungen.

Für die Signalverbindung der im ersten Gehäuseteil 41 angeordneten Ultraschallwandler 11, 21, 31 umfasst das Gelenk 43 ein erstes Gelenkteil 431 und ein zweites Gelenkteil 432, wobei das erste Gelenkteil 431 drehfest mit dem ersten Gehäuseteil 41 verbunden ist, und das zweite Gelenkteil 432 drehfest mit dem zweiten Gehäuseteil 42 verbunden ist, und wobei das erste Gelenkteil 431 und das zweite Gelenkteil 432 derart ausgestaltet und angeordnet sind, dass die Signalleitungen 11a, 21a, 31a von den im ersten Gehäuseteil 41 angeordneten Ultraschallwandlern 11, 21, 31 durch das Innere der Gelenkteile 431, 432 zu dem zweiten Gehäuseteil 42 führbar sind.

Bei der in Fig. 22 dargestellten Ausführungsform hat das Gelenk 43 die Drehachse D, um welche die beiden Gehäuseteile 41 und 42 relativ zueinander drehbar bzw. schwenkbar sind. Die Drehachse D ist parallel zur Mittelachse M des Messkanals 3. Das Gelenk 43 umfasst zwei im Wesentlichen zylindrische Zapfen 433, die sich von den beiden in Strömungsrichtung A gesehenen Enden des Gehäuses 4 in Richtung der Drehachse D in das Gehäuse 4 hinein erstrecken. Dazu ist an jedem dieser beiden Enden des Gehäuses 4 im zweiten Gehäuseteil 42 jeweils eine Öffnung vorgesehen, durch welche hindurch sich der jeweilige Zapfen 433 erstreckt. Jeder Zapfen 433 hat einen Kopf 434, mit welchem der jeweilige Zapfen 433 an dem jeweiligen Ende des Gehäuses 4, vorzugsweise dichtend, anliegt. Jeder Zapfen 433 ist so angeordnet, dass seine Längsachse auf der Drehachse D liegt.

In Richtung der Drehachse D gesehen sind zwischen den beiden Zapfen 433 das erste Gelenkteil 431 und das zweite Gelenkteil 432 nebeneinander angeordnet. Jedes Gelenkteil 431, 432 hat einen zylindrischen Bereich 435 bzw. 436, dessen Achse jeweils auf der Drehachse D liegt. Der eine der beiden Zapfen 433 greift in den Boden des zylindrischen Bereichs 435 des ersten Gelenkteils 431 ein, und der andere Zapfen 433 greift in den Boden des zylindrischen Bereichs 436 des zweiten Gelenkteils 432 ein. Ferner greifen die beiden zylindrischen Bereiche 435 und 436 an ihrer dem jeweiligen Boden abgewandten und offenen Seite ineinander ein. Dies ist beispielsweise derart ausgestaltet dass der zylindrische Bereich 436 des zweiten Gelenkteils 432 an seinem dem Boden abgewandten Ende eine ringförmige Ausnehmung in seiner Wandung aufweist, in welche der zylindrische Bereich 435 des ersten Gelenkteils 431 mit dem seinem Boden abgewandten Ende eingreift, sodass die beiden zylindrischen Bereiche 435 und 436 bezüglich der Richtung der Drehachse D überlappen. In dem Bereich in welchem die beiden zylindrischen Bereiche 435 und 436 überlappen, ist eine Dichtung zwischen den beiden zylindrischen Bereichen 435 und 436 vorgesehen, beispielsweise ein in eine ringförmige Nut eingelegter O-Ring 439.

Das erste Gelenkteil 431 weist ferner ein hohles erstes Ansatzstück 437 auf, welches sich von dem zylindrischen Bereich 435 im Wesentlichen senkrecht zur Drehachse D in das erste Gehäuseteil 41 hinein in Richtung des Messkanals 3 erstreckt, sodass das erste Ansatzstück 437 die von den Ultraschallwandlern 11, 21, 31 kommenden Signalleitungen 11a, 21a, 31a (siehe auch Fig. 2) aufnehmen kann. Das hohle erste Ansatzstück 437 des ersten Gelenkteils 431 ist in dem Sinne drehfest mit dem ersten Gehäuseteil 41 verbunden, dass sich das erste Gelenkteil 431 relativ zum ersten Gehäuseteil 41 nicht um die Drehachse D drehen lässt. Das heisst, wenn sich das erste Gelenkteil 431 um die Drehachse D dreht, so dreht sich zwangsläufig das erste Gehäuseteil 41 mit um die Drehachse D

Das zweite Gelenkteil 432 weist ferner ein hohles zweites Ansatzstück 438 auf, welches sich von dem zylindrischen Bereich 436 im Wesentlichen senkrecht zur Drehachse D in das zweite Gehäuseteil 42 hinein bis zu einer Kavität 421 im zweiten Gehäuseteil 42 erstreckt, in welcher die Kontrolleinrichtung 10 angeordnet ist. Das hohle zweite Ansatzstück 438 des zweiten Gelenkteils 432 ist in dem Sinne drehfest mit dem zweiten Gehäuseteil 42 verbunden, dass sich das zweite Gelenkteil 432 relativ zum zweiten Gehäuseteil 42 nicht um die Drehachse D drehen lässt. Das heisst, wenn sich das zweite Gelenkteil 432 um die Drehachse D dreht, so dreht sich zwangsläufig das zweite Gehäuseteil 42 um die Drehachse D.

Somit können die von den im ersten Gehäuseteil 41 angeordneten Ultraschallwandlern 11, 21, 31 kommenden Signalleitungen 11a, 21a, 31a durch das hohle erste Ansatzstück 437 hindurch in den zylindrischen Bereich 435 des ersten Gelenkteils 431 geführt werden und von dort durch den zylindrischen Bereich 436 des zweiten Gelenkteils 432 sowie durch das hohle zweite Ansatzstück 438 bis in die Kavität 421 geführt werden und dort mit der Kontrolleinrichtung 10 verbunden werden. Dies ist in Fig. 22 durch die gestrichelte Linie 11a; 21a; 31a symbolisch dargestellt.

Das erste Gehäuseteil 41 weist ferner zwei ringförmige Ösen 411 auf, die vorzugsweise einstückig mit dem ersten Gehäuseteil 41 ausgestaltet sind. Im zusammengesetzten Zustand fluchten die Öffnungen der Ösen 411 mit den beiden Öffnungen im zweiten Gehäuseteil 42, durch welche sich die beiden Zapfen 433 erstrecken, sodass sich der jeweilige Zapfen 433 von dem jeweiligen Ende des Gehäuses 4 durch die jeweilige Öffnung im zweiten Gehäuseteil 42 und die Öffnung der jeweiligen Öse 411 bis zu dem ersten Gelenkteil 431 bzw. bis zu dem zweiten Gelenkteil 432 erstreckt. Bezüglich der Richtung der Drehachse D gesehen, sind dabei die beiden Gelenkteile 431 und 432 zwischen den beiden Ösen 411 angeordnet.

Im zweiten Gehäuseteil 42 ist ferner eine Schraube 15 oder ein anderes Befestigungsmittel 15 vorgesehen, mit welchem die Kontrolleinrichtung 10 in der Kavität 421 fixiert werden kann. Bei der in Fig. 22 dargestellten Ausführungsform ist die Kontrolleinrichtung 10 zwischen der Schraube 15 und dem in das Gehäuse 4 eingeschraubten Anschluss 48 eingespannt.

## Patentansprüche

1. Ultraschall-Messvorrichtung zur Messung an einem in einer Leitung strömenden Fluid, mit einem schliessbaren Gehäuse (4), welches einen durchgängigen Messkanal (3) mit einer Mittelachse (M) aufweist, die eine Strömungsrichtung (A) festlegt, wobei das Gehäuse (4) derart zur lösbaren Befestigung an der Leitung (100) ausgestaltet ist, dass im geschlossenen Zustand des Gehäuses (4) der Messkanal (3) die Leitung (100) aufnehmen und bezüglich des Gehäuses (4) fixieren kann, sodass das Fluid den Messkanal (3) in der Strömungsrichtung (A) durchströmen kann, **dadurch gekennzeichnet, dass** im Gehäuse (4) ferner mindestens vier Ultraschallwandler (11, 12, 21, 22) zum jeweiligen Aussenden und Empfangen von Ultraschallsignalen vorgesehen sind, nämlich mindestens zwei erste Ultraschallwandler (11, 12) sowie zwei zweite Ultraschallwandler (21, 22), wobei die ersten Ultraschallwandler (11, 12) ein erstes Wandlerpaar bilden, und eine erste Messstrecke (81) definieren, über welche die beiden ersten Ultraschallwandler (11, 12) Ultraschallsignale miteinander austauschen können, und wobei die beiden zweiten Ultraschallwandler (21, 22) ein zweites Wandlerpaar bilden, und eine zweite Messtrecke (82) definieren, über welche die beiden zweiten Ultraschallwandler (21, 22) Ultraschallsignale miteinander austauschen können, und wobei ferner die Ultraschallwandler (11, 12, 21, 22) derart angeordnet und ausgerichtet sind, dass sowohl die erste Messstrecke (81) als auch die zweite Messstrecke (82) jeweils schräg zur Strömungsrichtung (A) verlaufen, wobei die Ultraschallwandler (11, 12, 21, 22) derart angeordnet und ausgerichtet sind, dass eine erste Messebene (M1), welche durch die Mittelachse (M) des Messkanals (3) und die erste Messstrecke (81) festgelegt ist, verschieden ist von einer zweiten Messebene (M2), welche durch die Mittelachse (M) des Messkanals (3) und die zweite Messstrecke (82) festgelegt ist.

2. Ultraschall-Messvorrichtung nach dem vorangehenden Anspruch, wobei mindestens sechs Ultraschallwandler (11, 12, 21, 22, 31, 32) vorgesehen sind, nämlich die beiden ersten Ultraschallwandler (11, 12), die beiden zweiten Ultraschallwandler (21, 22), sowie zwei dritte Ultraschallwandler (31, 32), wobei die dritten Ultraschallwandler (31, 32) ein drittes Wandlerpaar bilden, und eine dritte Messstrecke (83) definieren, über welche die beiden dritten Ultraschallwandler (31, 32) Ultraschallsignale miteinander austauschen können, und wobei die dritten Ultraschallwandler (31, 32) derart angeordnet und ausgerichtet sind, dass eine dritte Messebene (M3), welche durch die Mittelachse (M) des Messkanals (3) und die dritte Messstrecke (83) festgelegt ist, verschieden von der ersten Messebene (M1) oder verschieden von der zweiten Messebene (M2) ist.

3. Ultraschall-Messvorrichtung nach Anspruch 2, wobei die dritte Messebene (M3) verschieden von der ersten Messebene (M1) und verschieden von der zweiten Messebene (M2) ist.

4. Ultraschall-Messvorrichtung nach einem der vorangehenden Ansprüche, wobei der Messkanal (3) im geschlossenen Zustand des Gehäuses (4) senkrecht zu seiner Mittelachse (M) einen n-eckigen Querschnitt aufweist, und durch n Kanalflächen (35) begrenzt wird, wobei n eine ganze Zahl ist, die grösser oder gleich vier ist.

5. Ultraschall-Messvorrichtung nach einem der vorangehenden Ansprüche, wobei der Messkanal (3) im geschlossenen Zustand des Gehäuses senkrecht zu seiner Mittelachse (M) einen n-eckigen Querschnitt aufweist und durch n Kanalflächen (35) begrenzt wird, wobei n gleich sechs oder gleich acht ist.

6. Ultraschall-Messvorrichtung nach einem der Ansprüche 4-5, wobei die Ultraschallwandler (11, 12, 21, 22, 31, 32) derart angeordnet und ausgerichtet sind, dass sie mindestens zwei unterschiedliche und nicht parallele Kanalflächen (35) mit Ultraschallsignalen beaufschlagen können.

7. Ultraschall-Messvorrichtung nach einem der Ansprüche 4-6, wobei die Ultraschallwandler (11, 12, 21, 22, 31, 32) derart angeordnet und ausgerichtet sind, dass jedes Wandlerpaar jeweils eine andere Kanalfläche (35) mit Ultraschallsignalen beaufschlagen kann.

8. Ultraschall-Messvorrichtung nach einem der Ansprüche 4-7, wobei die Ultraschallwandler (11, 12, 21, 22, 31, 32) derart angeordnet und ausgerichtet sind, dass jeder Ultraschallwandler (11, 12, 21, 22, 31, 32) jeweils eine andere Kanalfläche (35) mit Ultraschallsignalen beaufschlagen kann.

9. Ultraschall-Messvorrichtung nach einem der Ansprüche 4-8, wobei die Anzahl der Ultraschallwandler (11, 12, 21, 22, 31, 32) gleich der Anzahl der Kanalflächen (35) ist.

10. Ultraschall-Messvorrichtung nach einem der Ansprüche 2-9, wobei die beiden dritten Ultraschallwandler (31, 32) so angeordnet und ausgerichtet sind, dass die dritte Messstrecke (83) senkrecht zur Mittelachse (M) des Messkanals (3) verläuft.

11. Ultraschall-Messvorrichtung nach einem der vorangehenden Ansprüche, wobei mindestens zwei der Ultraschallwandler (11, 12, 21, 22, 31, 32) jeweils mit einer gekrümmten Sende- und Empfangsfläche ausgestaltet sind.

12. Ultraschall-Messvorrichtung nach einem der vorangehenden Ansprüche, welche als Klemmvorrichtung für eine Klemmverbindung mit der Leitung (100) ausgestaltet ist, mit einem ersten Gehäuseteil (41), und mit einem zweiten Gehäuseteil (42), wobei das erste Gehäuseteil (41) und das zweite Gehäuseteil (42) mittels eines Gelenks (43) gelenkig miteinander verbunden sind, und im geschlossenen Zustand des Gehäuses (4) gemeinsam den Messkanal (3) begrenzen.

13. Ultraschall-Messvorrichtung nach Anspruch 12, wobei von jedem Wandlerpaar jeweils einer der beiden Ultraschallwandler in dem ersten Gehäuseteil (41) angeordnet ist, und der andere der beiden Ultraschallwandler in dem zweiten Gehäuseteil (42) angeordnet ist

14. Ultraschall-Messvorrichtung nach einem der Ansprüche 12-13, wobei das Gelenk (43) ein erstes Gelenkteil (431) und ein zweites Gelenkteil (432) umfasst, wobei das erste Gelenkteil (431) drehfest mit dem ersten Gehäuseteil (41) verbunden ist, und das zweite Gelenkteil (432) drehfest mit dem zweiten Gehäuseteil (42) verbunden ist, und wobei das erste Gelenkteil (431) und das zweite Gelenkteil (432) derart ausgestaltet und angeordnet sind, dass mindestens eine Signalleitung (11a, 21a, 31a) von dem ersten Gehäuseteil (41) durch das Innere der Gelenkteile (431, 432) zu dem zweiten Gehäuseteil (42) führbar ist.

15. Ultraschall-Messvorrichtung nach einem der vorangehenden Ansprüche, wobei der Messkanal (3) im geschlossenen Zustand des Gehäuses (4) einen Eingangsbereich (36), einen Mittelbereich (37) und einen Ausgangsbereich (38) aufweist, die in Strömungsrichtung (A) gesehen hintereinander angeordnet sind, wobei der Eingangsbereich (36) und der Ausgangsbereich (38) jeweils einen kreisförmigen Querschnitt senkrecht zur Mittelachse (M) aufweisen, wobei der Mittelbereich (37) einen n-eckigen Querschnitt senkrecht zur Mittelachse (M) aufweist, wobei n eine ganze Zahl ist, die grösser oder gleich vier ist, und wobei der n-eckige Querschnitt des Mittelbereichs (37) kontinuierlich in den kreisförmigen Querschnitt sowohl des Eingangsbereichs (36) als auch des Ausgangsbereichs (38) übergeht.

## Claims

1. An ultrasonic measuring device for the measurement on a fluid flowing in a pipe, with a closable housing (4), which has a continuous measuring channel (3) having a center axis (M) defining a flow direction (A), wherein the housing (4) is designed for a releasable attachment to the pipe (100) in such a way that in the closed state of the housing (4), the measuring channel (3) can receive the pipe (100) and can fix it with respect to the housing (4), so that the fluid can flow through the measuring channel (3) in the flow direction (A), **characterized in that** at least four ultrasonic transducers (11, 12, 21, 22) are further provided in the housing (4) for the respective emitting and receiving of ultrasonic signals, namely at least two first ultrasonic transducers (11, 12) and two second ultrasonic transducers (21, 22), the first ultrasonic transducers (11, 12) forming a first pair of transducers and defining a first measuring section (81) via which the two first ultrasonic transducers (11, 12) can exchange ultrasonic signals with each other, and the two second ultrasonic transducers (21, 22) forming a second pair of transducers and defining a second measuring section (82) via which the two second ultrasonic transducers (21, 22) can exchange ultrasonic signals with each other, and wherein the ultrasonic transducers (11, 12, 21, 22) are further arranged and aligned in such a way that both the first measuring section (81) and the second measuring section (82) each extend obliquely to the flow direction (A), wherein the ultrasonic transducers (11, 12, 21, 22) are arranged and aligned in such a way that a first measuring plane (M1) being defined by the center axis (M) of the measuring channel (3) and the first measuring section (81) is different from a second measuring plane (M2) being defined by the center axis (M) of the measuring channel (3) and the second measuring section (82).

2. An ultrasonic measuring device according to the claim, wherein at least six ultrasonic transducers (11, 12, 21, 22, 31, 32) are provided, namely the two first ultrasonic transducers (11, 12), the two second ultrasonic transducers (21, 22) and two third ultrasonic transducers (31, 32), the third ultrasonic transducers (31, 32) forming a third pair of transducers and defining a third measuring section (83) via which the two third ultrasonic transducers (31, 32) can exchange ultrasonic signals with each other, and wherein the third ultrasonic transducers (31, 32) are arranged and aligned in such a way that a third measuring plane (M3) being defined by the center axis (M) of the measuring channel (3) and the third measuring section (83) is different from the first measuring plane (M1) or different from the second measuring plane (M2).

3. An ultrasonic measuring device according to claim 2, wherein the third measuring plane (M3) is different from the first measuring plane (M1) and different from the second measuring plane (M2).

4. An ultrasonic measuring device according to anyone of the preceding claims, wherein the measuring channel (3) has an n-cornered cross-section perpendicular to its center axis (M) in the closed state of the housing (4), and is bounded by n channel surfaces (35), wherein n is an integer which is greater than or equal to four.

5. An ultrasonic measuring device according to anyone of the preceding claims, wherein the measuring channel (3) has an n-cornered cross-section perpendicular to its center axis (M) in the closed state of the housing (4), and is bounded by n channel surfaces (35), wherein n is equal to six or equal to eight.

6. An ultrasonic measuring device according to anyone of the claims 4 to 5, wherein the ultrasonic transducers (11, 12, 21, 22, 31, 32) are arranged and aligned in such a way that they can apply ultrasonic signals to at least two different and non-parallel channel surfaces (35).

7. An ultrasonic measuring device according to anyone of the claims 4 to 6, wherein the ultrasonic transducers (11, 12, 21, 22, 31, 32) are arranged and aligned in such a way that each pair of transducers can in each case apply ultrasonic signals to a different channel surface (35).

8. An ultrasonic measuring device according to anyone of the claims 4 to 7, wherein the ultrasonic transducers (11, 12, 21, 22, 31, 32) are arranged and aligned in such a way that each ultrasonic transducer (11, 12, 21, 22, 31, 32) can in each case apply ultrasonic signals to a different channel surface (35).

9. An ultrasonic measuring device according to anyone of the claims 4 to 8, wherein the number of ultrasonic transducers (11, 12, 21, 22, 31, 32) is equal to the number of channel surfaces (35).

10. An ultrasonic measuring device according to anyone of the claims 2 to 9, wherein the two third ultrasonic transducers (31, 32) are arranged and aligned in such a way that the third measuring section (83) extends perpendicular to the center axis (M) of the measuring channel (3).

11. An ultrasonic measuring device according to anyone of the preceding claims, wherein at least two of the ultrasonic transducers (11, 12, 21, 22, 31, 32) are each provided with a curved emitting and receiving surface.

12. An ultrasonic measuring device according to anyone of the preceding claims, which is designed as a clamping device for a clamping connection with the pipe (100), with a first housing part (41) and with a second housing part (42), the first housing part (41) and the second housing part (42) being connected to each other in an articulated manner by means of a joint and together bounding the measuring channel (3) in the closed state of the housing.

13. An ultrasonic measuring device according to claim 12, wherein one of the two ultrasonic transducers of each pair of transducers is in each case arranged in the first housing part (41) and the other of the two ultrasonic transducers is arranged in the second housing part (42).

14. An ultrasonic measuring device according to anyone of the claims 12 to 13, wherein the joint (43) comprises a first joint part (431) and a second joint part (432), wherein the first joint part (431) is connected to the first housing part (41) in a torque-proof manner, and the second joint part (432) is connected to the second housing part (42) in a torque-proof manner, and wherein the first joint part (431) and the second joint part (432) are designed and arranged in such a way that at least one signal line (11a, 21a, 31a) can be guided from the first housing part (41) through the interior of the joint parts (431, 432) to the second housing part (42).

15. An ultrasonic measuring device according to anyone of the preceding claims, wherein the measuring channel (3) has, in the closed state of the housing (4), an entrance area (36), a central area (37) and an exit area (38), which are arranged one behind the other when viewed in the flow direction (A), the entrance area (36) and the exit area (38) each having a circular cross-section perpendicular to the center axis (M), the central area (37) having an n-cornered cross-section perpendicular to the center axis (M), wherein n is an integer greater than or equal to four, and wherein the n-cornered cross-section of the central area (37) continuously merges into the circular cross-section of both the entrance area (36) and the exit area (38).

## Revendications

1. Un dispositif de mesure à ultrasons pour la mesure sur un fluide s'écoulant dans une conduite, avec un boîtier (4) pouvant être fermé, qui présente un canal de mesure (3) continu avec un axe central (M) qui définit une direction d'écoulement (A), dans lequel le boîtier (4) est conçu pour être fixé de manière amovible à la conduite (100) de telle sorte qu'à l'état fermé du boîtier (4), le canal de mesure (3) peut recevoir la conduite (100) et la fixer par rapport au boîtier (4), de sorte que le fluide peut traverser le canal de mesure (3) dans la direction d'écoulement (A), **caractérisé en ce qu'**au moins quatre transducteurs d'ultrasons (11, 12, 21, 22) sont en outre prévus dans le boîtier (4) pour l'émission et la réception respectives de signaux ultrasoniques, à savoir au moins deux premiers transducteurs d'ultrasons (11, 12) ainsi que deux deuxièmes transducteurs d'ultrasons (21, 22), dans lequel les premiers transducteurs d'ultrasons (11, 12) forment une première paire de transducteurs, et définissent un premier trajet de mesure (81) par lequel les deux premiers transducteurs d'ultrasons (11, 12) peuvent échanger des signaux ultrasoniques entre eux, et dans lequel les deux deuxièmes transducteurs d'ultrasons (21, 22) forment une deuxième paire de transducteurs, et définissent un deuxième trajet de mesure (82) par lequel les deux deuxièmes transducteurs d'ultrasons (21, 22) peuvent échanger des signaux ultrasoniques entre eux, et dans lequel les transducteurs d'ultrasons (11, 12, 21, 22) sont en outre disposés et alignés de telle sorte qu'aussi bien le premier trajet de mesure (81) que le deuxième trajet de mesure (82) s'étendent chacune obliquement par rapport à la direction d'écoulement (A), dans lequel les transducteurs d'ultrasons (11, 12, 21, 22) sont disposés et alignés de telle sorte qu'un premier plan de mesure (M1), qui est défini par l'axe central (M) du canal de mesure (3) et le premier trajet de mesure (81), est différent d'un deuxième plan de mesure (M2), qui est défini par l'axe central (M) du canal de mesure (3) et le deuxième trajet de mesure (82).

2. Un dispositif de mesure à ultrasons selon la revendication précédente, dans lequel au moins six transducteurs d'ultrasons (11, 12, 21, 22, 31, 32) sont prévus, à savoir les deux premiers transducteurs d'ultrasons (11, 12), les deux deuxièmes transducteurs d'ultrasons (21, 22), ainsi que deux troisièmes transducteurs d'ultrasons (31, 32), dans lequel les troisièmes transducteurs d'ultrasons (31, 32) forment une troisième paire de transducteurs, et définissent un troisième trajet de mesure (83) par lequel les deux troisièmes transducteurs d'ultrasons (31, 32) peuvent échanger des signaux ultrasoniques entre eux, et dans lequel les troisièmes transducteurs d'ultrasons (31, 32) sont disposés et alignés de telle sorte qu'un troisième plan de mesure (M3), qui est défini par l'axe central (M) du canal de mesure (3) et le troisième trajet de mesure (83), est différent du premier plan de mesure (M1) ou différent du deuxième plan de mesure (M2).

3. Un dispositif de mesure à ultrasons selon la revendication 2, dans lequel le troisième plan de mesure (M3) est différent du premier plan de mesure (M1) et différent du deuxième plan de mesure (M2).

4. Un dispositif de mesure à ultrasons selon l'une des revendications précédentes, dans lequel le canal de mesure (3) présente, à l'état fermé du boîtier (4), une section transversale à n angles perpendiculaires à son axe central (M), et est délimité par n surfaces de canal (35), dans lequel n est un nombre entier, qui est supérieur ou égal à quatre.

5. Un dispositif de mesure à ultrasons selon l'une des revendications précédentes, dans lequel le canal de mesure (3) présente, à l'état fermé du boîtier, une section transversale à n angles perpendiculaires à son axe central (M), et est délimité par n surfaces de canal (35), dans lequel n est égal à six ou égal à huit.

6. Un dispositif de mesure à ultrasons selon l'une des revendications 4 à 5, dans lequel les transducteurs d'ultrasons (11, 12, 21, 22, 31, 32) sont disposés et alignés de telle sorte qu'ils peuvent appliquer des signaux ultrasoniques sur au moins deux surfaces de canal (35) différentes et non parallèles.

7. Un dispositif de mesure à ultrasons selon l'une des revendications 4 à 6, dans lequel les transducteurs d'ultrasons (11, 12, 21, 22, 31, 32) sont disposés et alignés de telle sorte que chaque paire de transducteurs peut appliquer des signaux ultrasoniques sur une surface de canal (35) différente respective.

8. Un dispositif de mesure à ultrasons selon l'une des revendications 4 à 7, dans lequel les transducteurs d'ultrasons (11, 12, 21, 22, 31, 32) sont disposés et alignés de telle sorte que chaque transducteur d'ultrasons (11, 12, 21, 22, 31, 32) peut appliquer des signaux ultrasoniques sur une surface de canal (35) différente respective.

9. Un dispositif de mesure à ultrasons selon l'une des revendications 4 à 8, dans lequel le nombre de transducteurs d'ultrasons (11, 12, 21, 22, 31, 32) est égal au nombre de surfaces de canaux (35).

10. Un dispositif de mesure à ultrasons selon l'une des revendications 2 à 9, dans lequel les deux troisièmes transducteurs d'ultrasons (31, 32) sont disposés et alignés de telle sorte que le troisième trajet de mesure (83) s'étend perpendiculairement à l'axe central (M) du canal de mesure (3).

11. Un dispositif de mesure à ultrasons selon l'une des revendications précédentes, dans lequel au moins deux des transducteurs d'ultrasons (11, 12, 21, 22, 31, 32) sont chacun pourvus d'une surface d'émission et de réception courbée.

12. Un dispositif de mesure à ultrasons selon l'une des revendications précédentes, qui est conçu comme un dispositif de serrage pour une liaison par serrage avec la conduite (100), avec une première partie de boîtier (41), et avec une deuxième partie de boîtier (42), dans lequel la première partie de boîtier (41) et la deuxième partie de boîtier (42) sont reliées l'un à l'autre de manière articulée par une articulation (43) et, à l'état fermé du boîtier (4), délimitent ensemble le canal de mesure (3).

13. Un dispositif de mesure à ultrasons selon la revendication 12, dans lequel l'un des deux transducteurs d'ultrasons de chaque paire de transducteurs est respectivement disposé dans la première partie de boîtier (41) et l'autre des deux transducteurs d'ultrasons est disposé dans la deuxième partie de boîtier (42).

14. Un dispositif de mesure à ultrasons selon l'une des revendications 12 à 13, dans lequel l'articulation (43) comprend une première partie d'articulation (431) et une deuxième partie d'articulation (432), dans lequel la première partie d'articulation (431) est reliée de manière non rotative à la première partie de boîtier (41), et la deuxième partie d'articulation (432) est reliée de manière non rotative à la deuxième partie de boîtier (42), et dans lequel la première partie d'articulation (431) et la deuxième partie d'articulation (432) sont conçues et disposées de telle sorte qu'au moins une ligne de signalisation (11a, 21a, 31a) peut être guidée de la première partie de boîtier (41) vers la deuxième partie de boîtier (42) par l'intérieur des parties d'articulation (431, 432).

15. Un dispositif de mesure à ultrasons selon l'une des revendications précédentes, dans lequel le canal de mesure (3) présente, à l'état fermé du boîtier (4), une région d'entrée (36), une région centrale (37) et une région de sortie (38), qui sont disposées l'une derrière l'autre, vues dans la direction d'écoulement (A), dans lequel la région d'entrée (36) et la région de sortie (38) présentent chacune une section transversale circulaire perpendiculaire à l'axe central (M), dans lequel la région centrale (37) présente une section transversale à n angles perpendiculaire à l'axe central (M), dans lequel n est un nombre entier, qui est supérieur ou égal à quatre, et dans lequel la section transversale à n angles de la région centrale (37) se transforme de manière continue en la section transversale circulaire aussi bien de la région d'entrée (36) que de la région de sortie (38).
